# EUROPEAN PATENT SPECIFICATION

(11) **EP 4 343 208 B1**
(45) Date of publication and mention of the grant of the patent: **14.10.2026**
(21) Application number: 22803975.6
(22) Date of filing: 17.05.2022
(51) Int. Cl.: F24C 15/32, H05B 6/64, A47J 37/06

(54) **COOKING DEVICE**
GARGERÄT
DISPOSITIF DE CUISSON

(30) Priority: 17.05.2021 CN 202110535224
(43) Date of publication of application: 27.03.2024
(73) Proprietor: Guangdong Midea Kitchen Appliances Manufacturing Co., Ltd., Foshan, Guangdong 528311 (CN); Midea Group Co., Ltd., Foshan, Guangdong 528311 (CN)
(72) Inventor: CHO, Jaeman, Foshan, Guangdong 528311 (CN); AN, Lin, Foshan, Guangdong 528311 (CN); LING, Qihong, Foshan, Guangdong 528311 (CN); LIU, Gang, Foshan, Guangdong 528311 (CN); XIE, Mingyang, Foshan, Guangdong 528311 (CN)
(74) Representative: RGTH
(86) International application number: PCT/CN2022/093386
(87) International publication number: WO 2022/242655

(56) References cited:
- CN-A- 104 146 623
- CN-A- 110 150 995
- CN-A- 110 150 995
- CN-A- 110 693 343
- CN-A- 113 143 053
- CN-A- 113 251 449
- CN-U- 203 615 383
- CN-U- 206 371 926
- CN-U- 210 930 949
- CN-U- 210 930 949
- CN-U- 212 089 204
- CN-U- 212 394 654
- CN-U- 214 841 037
- US-A1- 2001 004 069

## Description

### CROSS-REFERENCE OF RELATED APPLICATIONS

The present application claims priority to Chinese Patent Application No. "202110535224.2" filed on May 17, 2021 by GUANGDONG MIDEA KITCHEN APPLIANCES MANUFACTURING CO., LTD. and MIDEA GROUP CO., LTD.

### TECHNICAL FIELD

The present application relates to the technical field of kitchen appliances, and more particularly to a cooking device.

### BACKGROUND

In the related art, in a microwave oven with an air frying function, the flow of hot air is inadequate and uneven, resulting in problems such as inconsistent coloring of food, presence of cooked and rare food, partial burning, etc. and not conducive to achieving accurate control of the heating process. CN 212 089 204 U discloses a cover and a cooking utensil. CN 110 693 343 A relates to an oven with drying function. CN 104 146 623 A relates to an electric oven with an air frying function. CN 210 930 949 A discloses a hot air assembly of a cooking equipment. CN 110 150 995 A discloses a fan and a cooking equipment. CN 203 615 383 U describes a microwave oven with a frying function.

### SUMMARY

The present application aims to solve at least one of the technical problems existing in the prior art. To this end, one object of the present application is to provide a cooking device capable of achieving a forced convection of hot air with more adequate convection.

A cooking device according to the invention comprises: a housing having a cooking cavity; a gas circulation apparatus disposed in the housing and at the top of the cooking cavity and driving a gas in the cooking cavity to flow and circulate. The gas circulation apparatus comprises a gas driving part. Further, the cooking device comprises a heating apparatus, wherein the gas circulation apparatus and the heating apparatus at the top of the cooking cavity continuously supply hot air to form a full range of three-dimensional heating on the bottom, top and side of food, achieving an excellent cooking effect. The gas driving part has a gas driving part cavity provided therein, the gas driving part comprising a fan blade part at least partially disposed in the gas driving part cavity, wherein the fan blade part comprises a horizontal fan blade part and a vertical fan blade part, wherein an upper end of the vertical fan blade part is connected to the horizontal fan blade part, so that the fan blade part generally forms an "L" shape. When driven by the gas driving part, the gas has a first part flowing in a first direction and a second part flowing in a second direction, one of the first direction and the second direction is a circumferential direction of the gas driving part, and the other of the first direction and the second direction is a radial direction of the gas driving part. The fan blade part further comprises a fan blade disc, and the inner ends of the plurality of horizontal fan blades are connected to the periphery of the fan blade disc, so that the gas can flow from the middle part to the fan blade part, and then flow through the horizontal fan blades and the vertical fan blades.

In the cooking device according to the invention, the gas is driven to move in the first direction and the second direction by the gas driving part, so that the gas can adequately flow in the cooking cavity, increasing the heat convection generation area and generation intensity in the cooking cavity, ensuring an even temperature field and heat convection in the cooking cavity, enabling the food to be more quickly dehydrated and colored. Besides, the cooking device solves the problem of burning the surface of the food caused by inadequate and uneven heat convection, enabling the temperature monitoring data to more accurately reflect the heating temperature of the food to achieve accurate control of the heating process.

In addition, the above cooking device according to the embodiments of the present application may further have the following additional technical features:

According to the present invention, the gas driving part has a gas driving part cavity provided therein. The gas driving part comprises a fan blade part at least partially disposed in the gas driving part cavity, and an annular gap between the fan blade part and a periphery of the gas driving part cavity has a radial width that is not constant in a circumferential direction of the gas driving part cavity.

According to the invention, the fan blade part is disposed eccentrically from the gas driving part cavity.

According to the present invention, an equivalent radius of the fan blade part is r, a radius of a periphery of the gas driving part cavity is R, an eccentric distance between the rotational axis of the fan blade part and the central axis of the gas driving part cavity is e, and a width of the annular gap is C, where 20 mm≤R-r≤30 mm, 0<e≤0.4(R-r), and 0.6(R-r)≤C≤1.4(R-r).

According to some embodiments of the present application, the annular gap has a minimum gap and a maximum gap which are respectively located at two sides of the fan blade part, and the annular gap is divided into two sections evenly varying from the minimum gap to the maximum gap.

According to some embodiments of the present application, the maximum gap is smaller than or equal to 42 mm and the minimum gap is greater than or equal to 12 mm.

According to some embodiments of the present application, the fan blade part is coaxially arranged with the gas driving part cavity, and a distance between a periphery of the gas driving part cavity and a central axis of the gas driving part cavity is not constant.

According to some embodiments of the present application, the gas driving part comprises a driving cover body having a plurality of air holes on a side surface of the driving cover body, wherein the side surface of the driving cover body facing towards the cooking cavity of the cooking device, and a fan blade part rotatably disposed in the driving cover body.

According to some embodiments of the present application, the driving cover body comprises a driving cover body top wall and a driving cover body side wall connected to the driving cover body top wall. The fan blade part is located below the driving cover body top wall and surrounded by the driving cover body side wall.

According to some embodiments of the present application, the driving cover body side wall is formed as a divergent side wall. A small diameter end of the driving cover body side wall is connected to the driving cover body top wall, and a large diameter end of the driving cover body side wall is away from the driving cover body top wall.

According to some embodiments of the present application, the heating apparatus arranged in the cooking cavity and adjacent to the driving cover body. The driving cover body side wall has a virtual extension surface extending towards the cooking cavity. A range formed by deflecting a predetermined small angle β towards two sides of the virtual extension surface with a large diameter end of the driving cover body side wall as a fulcrum is a predetermined range. A peripheral edge of the heating apparatus does not exceed the predetermined range.

According to some embodiments of the present application, the small angle β satisfies a relationship: 0°<β≤10°.

According to some embodiments of the present application, an comprised angle γ formed between the driving cover body side wall and the cross-section of the cooking cavity ranges from 15° to 75°.

According to some embodiments of the present application, the driving cover body top wall comprises a middle part top wall and an outer annular top wall circumferentially connected to the middle part top wall. An axial distance between the outer annular top wall and the fan blade part is greater than an axial distance between the middle part top wall and the fan blade part.

According to some embodiments of the present application, an interface of the outer annular top wall and the middle part top wall corresponds to a periphery of the fan blade part.

According to some embodiments of the present application, a wind deflector is formed by integrally forming the driving cover body top wall and the driving cover body side wall.

According to some embodiments of the present application, the driving cover body comprises a driving cover body bottom wall connected to an end of the driving cover body side wall facing away from the driving cover body top wall. The plurality of air holes is formed at the driving cover body bottom wall.

According to some embodiments of the present application, the driving cover body bottom wall protrudes in a direction facing away from the driving cover body top wall, to form an inner concave cavity body at a side of the driving cover body bottom wall facing towards the driving cover body top wall. The inner concave cavity body is configured as a part of a gas driving part cavity in the gas driving part.

According to some embodiments of the present application, a maximum depth of the inner concave cavity body is not smaller than 10 mm.

According to some embodiments of the present application, at least a part of the fan blade part extends into the inner concave cavity body.

According to some embodiments of the present application, the gas circulation apparatus further comprises a driving motor connected to the gas driving part. The driving motor is mounted at a top of the gas driving part.

According to some embodiments of the present application, the cooking device further comprises a heat insulation plate, the heat insulation plate being disposed between the driving motor and the gas driving part. The heat insulation plate is connected to the gas driving part through a heat insulation plate support, and the driving motor is connected to the heat insulation plate through a motor support.

Additional aspects and advantages of the present application will be set forth in part in the description which follows and, in part, will be obvious from the description, or may be learned by practice of the present application.

### BRIEF DESCRIPTION OF DRAWINGS

The foregoing and/or additional aspects and advantages of the present application will become apparent and readily appreciated from the following description of the embodiments, taken in conjunction with the accompanying drawings of which:
FIG. 1 is a schematic structural diagram of a cooking device according to an embodiment of the present application;
FIG. 2 is a longitudinal sectional view of FIG. 1;
FIG. 3 is a schematic enlarged structural diagram at circle A in FIG. 2;
FIG. 4 is a schematic structural diagram of a bottom shelf according to an embodiment of the present application;
FIG. 5 is a top view of a top shelf according to an embodiment of the present application;
FIG. 6 is a front view of a top shelf (not showing a mesh structure) according to an embodiment of the present application;
FIG. 7 is a schematic structural diagram of a shelf apparatus according to an embodiment of the present application;
FIG. 8 is a schematic partial structural diagram of a cooking device according to an embodiment of the present application;
FIG. 9 is an exploded view of FIG. 8;
FIG. 10 is a cross-sectional view of FIG. 8;
FIG. 11 is a schematic enlarged structural diagram at circle B in FIG. 10;
FIG. 12 is a schematic structural diagram of a fan blade part according to an embodiment of the present application;
FIG. 13 is a schematic structural diagram of an air deflector according to an embodiment of the present application;
FIG. 14 is a schematic structural diagram of an air deflector and a fan blade part according to an embodiment of the present application;
FIG. 15 is a schematic structural diagram of a top plate according to an embodiment of the present application;
FIG. 16 is a top view of a top plate according to an embodiment of the present application;
FIG. 17 is a schematic enlarged structural diagram at circle C in FIG. 16;
FIG. 18 is a cross-sectional view of FIG. 15;
FIG. 19 is a transverse cross-sectional view of FIG. 1.

Reference Numerals:
cooking device 100;
housing 10; cooking cavity 101; first cooking cavity 102; second cooking cavity 103; support mating edge 11;
gas circulation apparatus 20;
gas driving part 21; gas driving part cavity 211; annular gap 212; minimum gap 213; maximum gap 214;
driving cover body 22;
driving cover body top wall 221; outer annular top wall 225; middle part top wall 226;
driving cover body side wall 222;
driving cover body bottom wall 223; inner concave cavity body 227; driving cover body central bottom wall 228; driving cover body peripheral bottom wall 229; virtual extension surface 224;
fan blade part 23; horizontal fan blade 231; vertical fan blade 232;
air hole 24; return air hole 241; outlet air hole 242; first ring of outlet air holes 243; second ring of outlet air holes 244; third ring of outlet air holes 245;
air deflector 25; top plate 26;
driving motor 27; motor support 28;
heating apparatus 30; outer peripheral heating apparatus 31; inner peripheral heating apparatus 32;
shelf apparatus 40; gas flow channel 401; air induction section 402;
top shelf 41; top shelf bottom wall 411; top shelf side wall 412;
bottom shelf 42; bottom shelf bottom wall 421; bottom shelf side wall 422;
bottom shelf support edge 43; partition support foot 44;
gas guide structure 50; outer guide structure 51; inner guide structure 52;
heat insulation plate 61; heat insulation plate support 62; microwave transmitter 63; control panel 64.

### DESCRIPTION OF EMBODIMENTS

Reference will now be made in detail to the embodiments of the present application, examples of which are illustrated in the accompanying drawings. Wherever possible, the same or similar reference numbers will be used throughout to refer to the same or similar elements or elements having the same or similar function. The embodiments described below with reference to the figures are illustrative only, to be interpreted merely as illustrative of the present application and not to be construed as limiting the present application.

In the description of the present application, it is to be understood that the terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like refer to orientations or positional relationships based on those shown in the drawings for ease of description and simplicity of description, not intended or suggested that the apparatus or element referred to must have a particular orientation, be constructed and operated in a particular orientation, and therefore should not be construed as limiting the present application.

In the description of the present application, "a first feature", "a second feature" may comprise one or more of the features, "a plurality" means two or more, the first feature being "above" or "below" the second feature may comprise that the first and second features are in direct contact, and may also comprise that the first and second features are not in direct contact but are in contact through additional features between them, the first feature being "on top of", "above" and "over" the second feature comprises that the first feature is directly above and obliquely above the second feature, or merely indicates that the first feature is at a higher level than the second feature.

A shelf apparatus 40 for a cooking device 100 and the cooking device 100 according to an embodiment of the present application will be described with reference to the accompanying drawings. Here, the cooking device 100 may be an air frying device, a barbecue device, a microwave oven with an air frying function, or the like.

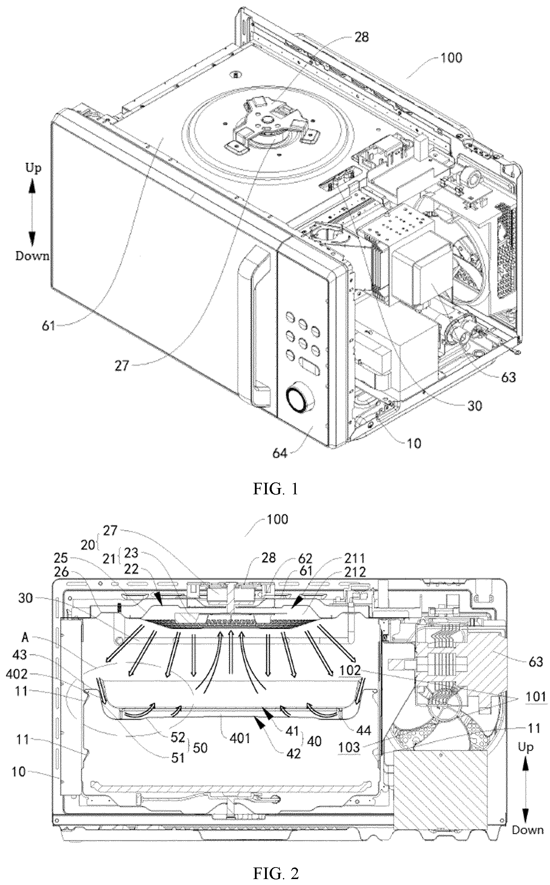

With reference to FIGS. 1-3, the shelf apparatus 40 for the cooking device 100 according to an embodiment of the present application may comprise a top shelf 41, a bottom shelf 42 and a gas guide structure 50.

Specifically, as shown in FIGS. 2-7, the top shelf 41 may be disposed above the bottom shelf 42, the top shelf 41 may be used to hold food to be cooked, and the bottom shelf 42 may support and fix a top support. Moreover, there is a gap between the top shelf 41 and the bottom shelf 42, to form a gas flow channel 401 located below the top shelf 41. The gas guide structure 50 is configured to guide the gas to the gas flow channel 401 and through the top shelf 41.

In the related art, the bottom surface of the barbecue frame is fitted with the tray without a gap, and the bottom wall of the barbecue frame has no holes. In the process of air frying, the hot air can enter into the barbecue frame only through the top opening and at least one of the through holes of the side wall of the barbecue frame to contact with the food, resulting in uneven heating of the food, for example, the lower surface of the food is completely out of contact with the hot air, the food can be cooked only from the top to the bottom or from the periphery to the middle, resulting in the lower surface of the food not being colored, or presence of cooked and rare food.

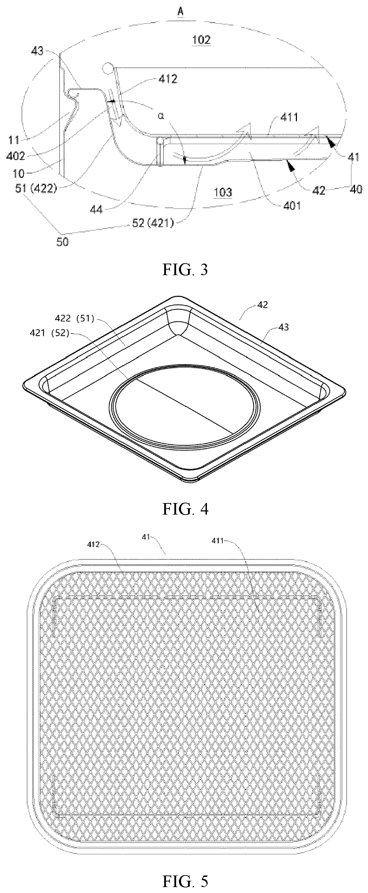

However, in some embodiments of the present application, by defining the gas flow channel 401 located below the top shelf 41 and disposing the gas guide structure 50, the shelf apparatus 40, as an accessory of the cooking device 100, not only has a bearing function, but also can play the role of drainage and air guiding. As shown in FIGS. 2 and 3, the gas guide structure 50 is configured to guide the gas to the gas flow channel 401, i.e., to the lower side of the top shelf 41, so that the gas can enter the top shelf 41 from the lower side to come into contact with the lower surface of the food in the top shelf 41. The rising of the hot air further contacts the side surface and the upper surface of the food to achieve all-round three-dimensional heating, solving the problems of the lower surface of the food not being colored, or presence of cooked and rare food in the prior art.

Furthermore, in some embodiments, the top shelf 41 also has a top opening from which gas can enter into the top shelf 41, on the one hand facilitating the entry and exit of gas into and out of the top shelf 41 to achieve gas circulation and flow, and on the other hand gas can be blown from the upper side towards the food, the upper side inlet air cooperating with the lower side inlet air so that the food is heated adequately and evenly.

It should be noted that the "bottom" and "top" of the bottom shelf 42 and the top shelf 41 herein do not limit the position of the two shelves in the cooking device 100, but merely indicate the relative position of the top shelf 41 and the bottom shelf 42, i.e., the top shelf 41 is disposed above the bottom shelf 42.

The shelf apparatus 40 for the cooking device 100 according to an embodiment of the present application, by defining the gas flow channel 401 between the top shelf 41 and the bottom shelf 42 and disposing the gas guide structure 50, not only has a bearing function, but also can play the role of drainage and air guiding, so that the gas can enter the top shelf 41 from the lower side, achieving all-round three-dimensional heating, improving the evenness of food heating, and effectively solving the problems such as inconsistent coloring of food, presence of cooked and rare food, partial burning, etc.

The cooking device 100 according to some embodiments of the present application comprises the shelf apparatus 40 for the cooking device 100 according to the embodiments of the present application. Since the shelf apparatus 40 according to the embodiments of the present application has the above beneficial technical effects, in the cooking device 100 according to the embodiment of the present application, by defining the gas flow channel 401 between the top shelf 41 and the bottom shelf 42 and disposing the gas guide structure 50, not only has a bearing function, but also can play the role of drainage and air guiding, so that the gas can enter the top shelf 41 from the lower side, achieving all-round three-dimensional heating, improving the evenness of food heating, and effectively solving the problems such as inconsistent coloring of food, presence of cooked and rare food, partial burning, etc.

The gas guide structure 50 according to some embodiments of the present application is described below in conjunction with the figures.

In some embodiments of the present application, as shown in FIGS. 2-4, the gas guide structure 50 may comprise an outer guide structure 51, at least a portion of which may be disposed at the periphery of the gas flow channel 401, and the outer guide structure 51 is capable of guiding gas into the gas flow channel 401 such that the gas flows smoothly below the top shelf 41, reducing the resistance to gas entering the gas flow channel 401.

In some embodiments of the present application, the outer guide structure 51 may be continuously disposed at the periphery of the gas flow channel 401, for example, the outer guide structure 51 may be formed as an annular guide structure, whereby the outer guide structure 51 is capable of guiding the gas of the entire periphery of the gas flow channel 401, such that the gas is introduced into the gas flow channel 401 from the periphery and flows towards the middle and upward to rapidly and evenly fill the gas flow channel 401 and bring this lower surface of the food into more even contact with the gas, improving the evenness of gas flux and heating.

In some embodiments, as shown in FIGS. 3 and 4, the outer guide structure 51 may comprise an outer guide wall disposed obliquely relative to the gas flow channel 401. The inclined outer guide wall has a small impact resistance to the gas during the guiding of the gas, avoids a loss of flow velocity, and enables the gas to have an inward flow velocity component, i.e., to have a tendency to flow towards the gas flow channel 401, so that the gas, after entering the gas flow channel 401, can not only flow upward into the top shelf 41, but also flow towards the middle part of the gas flow channel 401, and then flow upward from the middle part of the gas flow channel 401 into the top shelf 41, so that the gas is evenly distributed throughout the gas flow channel 401, and thus the entire lower surface of the food is evenly heated.

In some embodiments, as shown in FIGS. 2 and 3, the outer guide wall may be configured as an inclined sloped wall that extends obliquely with respect to a cross-section of the cooking device 100 (e.g., a cross-section in a horizontal direction), and an comprised angle α between the outer guide wall and a cross-section of the cooking device 100 may satisfy: 110°≤α≤160°. For example, in some particular embodiments, the comprised angle α may be 120°, 130°, 140°, 150°, etc. In the above angular range, the impact resistance of the outer guide wall to the gas is small, and the gas is evenly and adequately dispersed after entering the gas flow channel 401.

In some embodiments of the present application, as shown in FIGS. 2-4, the gas guide structure 50 may comprise an inner guide structure 52, at least a portion of the inner guide structure 52 may be disposed in the gas flow channel 401, and the inner guide structure 52 is configured to guide the gas in the gas flow channel 401 through the top shelf 41. The guiding action of the inner guide structure 52 makes gas entry into the top shelf 41 smoother and helps to avoid loss of gas flow velocity and improve efficiency and effectiveness of food cooking.

In some particular embodiments, as shown in FIGS. 2-4, the inner guide structure 52 may comprise an inner guide protrusion that protrudes towards the top shelf 41 such that the flow of gas past the surface of the inner guide protrusion may change towards the top shelf 41, i.e., the gas reflects against the inner guide protrusion towards the upper portion of the cooking cavity 101 to smoothly enter the top shelf 41.

In some embodiments, as shown in FIG. 2, the inner guide protrusion may correspond to a middle part region of the top shelf 41, such that when the gas guided by the inner guide protrusion enters the top shelf 41, it is guided to the middle part region of the top shelf 41, adequately heating the lower surface of the food after entering the top shelf 41.

In some particular embodiments, as shown in FIGS. 2 and 3, the inner guide protrusion may be configured as a protrusion structure with a high center and a low periphery. When the gas flows through the edge of the protrusion structure, the gas extends obliquely towards the middle and upward under the guiding action of the protrusion structure, so as to achieve the effect of concentrating towards the middle part of the top shelf 41, and avoid the flow velocity loss caused by the concentration of the gas in the middle part, thereby improving the efficiency of the gas entering the top shelf 41 and improving the cooking effect.

In some embodiments of the present application, as shown in FIGS. 2-4, the gas guide structure 50 may comprise both the outer guide structure 51 and the inner guide structure 52. After the outer guide structure 51 guides the gas into the gas flow channel 401, the gas can further pass through the top shelf 41 under the guidance of the inner guide structure 52. The outer guide structure 51, in cooperation with the inner guide structure 52, can greatly improve the effect of the gas entering the top shelf 41 from the lower side of the top shelf 41, thereby greatly improving the evenness of the all-round heating of the food.

In the embodiment of the present application, the particular structure of the gas guide structure 50 may be flexibly disposed according to practical situations.

In some embodiments, the gas guide structure 50 and the bottom shelf 42 may be separate pieces connected together, for example, the gas guide structure 50 may be a bent and extended plate mounted between the bottom shelf 42 and the top shelf 41 to guide the gas.

In other embodiments, the gas guide structure 50 may be integrally formed in the bottom shelf 42, in other words, the gas guide structure 50 may be part of the bottom shelf 42. Specifically, as shown in FIGS. 2-4, the bottom shelf 42 may comprise the bottom shelf bottom wall 421 and the bottom shelf side wall 422. The inner guide structure 52 may be disposed on the bottom shelf bottom wall 421 so as to be located below the top shelf 41; the bottom shelf side wall 422 may be configured as the outer guide structure 51 and located at the periphery of the top shelf 41. As a result, there is no need to mount the gas guide structure 50, which also reduces the space and production costs, and is easy for users to clean.

In some embodiments of the present application, as shown in FIG. 2, the shelf apparatus 40 may be configured to partition a cooking cavity 101 into a first cooking cavity 102 and a second cooking cavity 103, and a heating apparatus 30 may be disposed in the first cooking cavity 102 to heat the gas and food in the first cooking cavity 102. The gas circulation apparatus 20 is configured to drive gas in the first cooking cavity 102 to flow and circulate, and the shelf apparatus 40 may obstruct the gas in the first cooking cavity 102 from flowing into the second cooking cavity 103 by means of partition. As a result, by partitioning the cooking cavity 101 by the shelf apparatus 40, heat may be concentrated in the first cooking cavity 102 to create a high heat density space, and the food can be exposed to a more adequately high temperature hot air environment to improve the dehydration efficiency and coloring effect of the food surface.

In some embodiments, the ratio of the height of the first cooking cavity 102 to the height of the second cooking cavity 103 is smaller than one-half, allowing heat to be more adequately concentrated in the first cooking cavity 102, creating a higher heat density space, thereby allowing food to be cooked by high temperature hot air, and then achieving a more excellent cooking effect.

In some embodiments of the present application, as shown in FIGS. 3 and 4, the bottom shelf 42 may also comprise a bottom shelf support edge 43. The bottom shelf support edge 43 may be connected to an upper end of the bottom shelf side wall 422, and the bottom shelf 42 may be mounted to the cooking device 100 through the bottom shelf support edge 43.

In some particular embodiments, as shown in FIGS. 2 and 3, the cooking device 100 comprises a housing 10 having the cooking cavity 101, a side wall of the cooking cavity 101 may be provided with a support mating edge 11, and the bottom shelf support edge 43 may be supported on the support mating edge 11 to achieve a support stop of the bottom shelf 42 in the cooking cavity 101.

In addition, at least one of the bottom shelf support edge 43 and the support mating edge 11 may be an annular edge so as to shield the space above the shelf apparatus 40 from gas, so that gas flows as far as possible into the top shelf 41, and does not easily flow from the periphery of the shelf apparatus 40 to the space below the shelf apparatus 40, thereby reducing the space size of gas flow, which is conducive to improving cooking efficiency and reducing energy consumption.

In some embodiments, the side wall of the cooking cavity 101 may be provided with a plurality of support mating edges 11. The plurality of support mating edges 11 are arranged at longitudinal intervals, and the bottom shelf support edge 43 may mate with the support mating edges 11 at any height therein to adjust the mounting height of the shelf apparatus 40, thereby adjusting the space size above the shelf apparatus 40, and adjusting the heating effect of the food in the top shelf 41.

Of course, the support structure of the bottom shelf 42 comprises, but is not limited to, the bottom shelf support edge 43. In other embodiments, the bottom of the bottom shelf 42 may be provided with a bottom shelf support foot that may be supported on the bottom wall of the cooking cavity 101, such that the bottom shelf 42 is spaced from the bottom wall of the cooking cavity 101 by a certain distance, thereby reducing the space size above the shelf apparatus 40 for hot air circulation and increasing heat density.

In some embodiments of the present application, as shown in FIGS. 3 and 5-6, the top shelf 41 may have a top shelf bottom wall 411 and a top shelf side wall 412. As shown in FIGS. 3 and 4, the bottom shelf 42 may comprise a bottom shelf bottom wall 421 and a bottom shelf side wall 422.

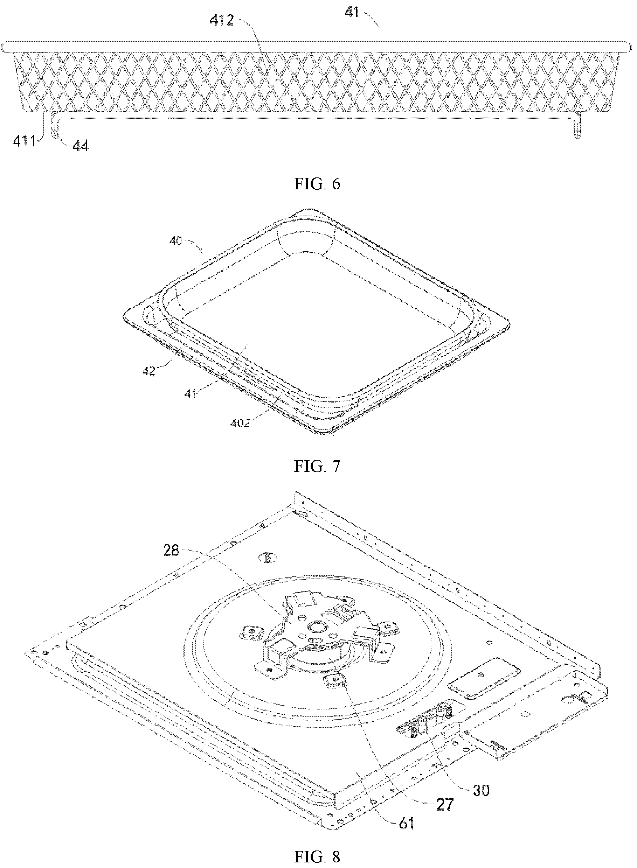

As shown in FIGS. 3-7, the top shelf bottom wall 411 may be spaced apart from the bottom shelf bottom wall 421 to define the gas flow channel 401, and the top shelf bottom wall 411 may be provided with a mesh (the mesh structure provided on the top shelf 41 is not shown in FIG. 7), such that the gas in the gas flow channel 401 may enter the top shelf 41 through the mesh on the top shelf bottom wall 411. Of course, the structure of the top shelf bottom wall 411, comprising but not limited to that shown in FIG. 5, needs only to satisfy the requirement that gas can pass through the top shelf bottom wall 411.

As shown in FIGS. 3 and 4, the bottom shelf side wall 422 may be configured as the outer guide structure 51, and the top shelf side wall 412 may be adjacent to but spaced apart from the bottom shelf side wall 422 such that an air induction section 402 may be formed therebetween. The air induction section 402 is in communication with the gas flow channel 401, the gas may first enter the air induction section 402 and flow towards the gas flow channel 401 under the guidance of the outer guide structure 51, and the air induction section 402 makes the gas flow along the outer guide structure 51 easier, thereby improving the guiding effect.

In some embodiments of the present application, as shown in FIG. 6, the top shelf side wall 412 may be provided with a mesh, and the top shelf 41 may be formed as a metal shelf with a mesh structure for both the bottom wall and the top wall. Such that the gas in the air induction section 402 may not only flow into the gas flow channel 401, but also be blown into the top shelf 41 from the side surface through the mesh of the top shelf side wall 412 to blow from the side surface to the food, thereby improving the evenness of heating and coloring consistency of the side of the food.

In other embodiments of the present application, the top shelf side wall 412 may be configured as an annular continuous wall. In other words, no mesh structure is disposed on the top shelf side wall 412, and the air in the air induction section 402 can completely flow into the gas flow channel 401, thereby increasing the amount of air entering the top shelf 41 from the lower side. Moreover, the surface of the top shelf side wall 412 facing away from the air induction section 402 may guide the gas. Gas flowing there from the top opening of the top shelf 41 along the top shelf side wall 412 may flow from the side surface to the food in the top shelf 41, so as to improve the all-round heating effect of the food.

In some embodiments, as shown in FIG. 3, the top shelf side wall 412 and the bottom shelf side wall 422 may be parallel to each other, or the top shelf side wall 412 and the bottom shelf side wall 422 may be at an angle of no more than 30°, so as to avoid that the local flow area of the air induction section 402 is too small to affect the air intake. The air pressure of the gas in the air induction section 402 remains substantially constant, enabling more gas flow into the gas flow channel 401 and more adequate contact between the lower surface of the food and the gas.

In some embodiments of the present application, as shown in FIG. 3, the top shelf side wall 412 may extend upwardly beyond the bottom shelf side wall 422, in other words, the upper end of the top shelf side wall 412 is higher than the upper end of the bottom shelf side wall 422, and the distance between the overhanging portion of the top shelf side wall 412 and the side wall of the cooking cavity 101 is greater than the distance between the top shelf side wall 412 and the bottom shelf side wall 422, such that the overhanging portion of the top shelf side wall 412 may first play a certain role in guiding the gas to more easily enter the air induction section 402.

In some embodiments of the present application, as shown in FIGS. 3 and 5, the top shelf bottom wall 411 may be provided with a partition support foot 44. The partition support foot 44 may be supported on the bottom shelf bottom wall 421 to allow the bottom shelf bottom wall 421 and the top shelf bottom wall 411 to be spaced up and down to form the gas flow channel 401 between the bottom shelf bottom wall 421 and the top shelf bottom wall 411 while achieving a support stop of the top shelf 41. The structure defining the gas flow channel 401 is simple and stable, and the structure of the partition support foot 44 is simple, small in volume, and small in resistance to the gas flowing from the air induction section 402 and the gas flow channel 401.

In some embodiments, the partition support foot 44 may be a protrusion integrally formed in the top shelf bottom wall 411, with a more stable structure. In other embodiments, as shown in FIG. 3, the partition support foot 44 may comprise a support part on which the top shelf bottom wall 411 is supported, and a foot part disposed on an underside of the support part and supported on the bottom shelf bottom wall 421.

In one particular embodiment of the present application, as shown in FIGS. 2-7, the bottom shelf 42 is formed as a baking tray and the top shelf 41 is formed as a baking basket. The baking tray is fixed inside the cooking cavity 101 through the bottom shelf support edge 43, so that the cooking cavity 101 is partitioned into an upper and a lower space. The cooking cavity 101 is partitioned so that heat is concentrated in the upper space, creating a high heat dense space, and food is in an adequately high temperature hot air environment. The bottom shelf side wall 422 may be an inclined edge to form the outer guide structure 51 and maintain a gap distance from the baking basket. In this way, hot air may flow along the side wall of the cooking cavity 101 to the bottom shelf side wall 422, and the bottom shelf side wall 422 plays a role of guiding more hot air to flow along the gap between the baking tray and the baking basket towards the bottom of the baking basket by using the inclined edge.

The center of the baking tray is a protruding circular contoured structure formed as the inner guide structure 52, such that the gas flow channel 401 forms as a flow channel with low four sides and high center. The hot air hits the bottom shelf bottom wall 421 and is reflected to flow towards the upper part of the cooking cavity 101. The hot air flows through the circular contoured structure and is guided to the center and passes through the mesh of the baking basket to heat the bottom of the food. The bottom of the baking basket is provided with the partition support foot 44 that separates the contact with the surface of the baking tray, so that the baking tray and the baking basket have more space for hot air flow. The hot air flows through the mesh around the baking basket to heat the food in three dimensions. The gas circulation apparatus 20 and the heating apparatus 30 at the top of the cooking cavity 101 continuously supply hot air to form a full range of three-dimensional heating on the bottom, top and side of the food, achieving an excellent cooking effect. At the same time, the baking tray also has the function of an oil receiving tray, and the waste materials generated when food is heated may flow to the baking tray through the mesh of the baking tray, improving the easy cleaning of the cooking cavity 101.

A cooking device 100 according to some embodiments of the present application will now be described with reference to the accompanying drawings.

In the invention, as shown in FIGS. 1 and 2, the cooking device 100 comprises the housing 10 and a gas circulation apparatus 20. The housing 10 has the cooking cavity 101 therein, and the cooking cavity 101 may be used for placing food directly or for placing a container for food (such as the shelf apparatus 40), for placing food indirectly. The gas circulation apparatus 20 is disposed in the housing 10, and the gas circulation apparatus 20 is configured to drive gas in the cooking cavity 101 to flow and circulate so as to heat and cook the food in the cooking cavity 101.

With reference to FIGS. 2 and 8 to 11, the gas circulation apparatus 20 comprises a gas driving part 21, when driven by the gas driving part 21, gas has a first part flowing in a first direction and a second part flowing in a second direction. The first direction may be a circumferential direction of the gas driving part 21, and the second direction may be a radial direction of the gas driving part 21. Alternatively, the first direction may be a radial direction of the gas driving part 21, and the second direction may be a circumferential direction of the gas driving part 21.

In some embodiments, a third portion of the driven gas may move in a third direction which is axial to the gas driving part 21, thereby further improving the adequacy of convection.

The cooking device 100 according to the invention, the gas is driven to move in the first direction and the second direction by the gas driving part 21, so that the gas can adequately flow in the cooking cavity 101, increasing the heat convection generation area and generation intensity in the cooking cavity 101, ensuring an even temperature field and heat convection in the cooking cavity 101, enabling the food to be more quickly dehydrated and colored, and solving the problem of burning the surface of the food caused by inadequate and uneven heat convection, and enabling the temperature monitoring data to more accurately reflect the heating temperature of the food to achieve accurate control of the heating process.

In the invention, as shown in FIGS. 2 and 10-11, the gas driving part 21 has a gas driving part cavity 211 provided therein, and the gas driving part 21 comprises a fan blade part 23. At least a portion of the fan blade part 23 is disposed in the gas driving part cavity 211 such that rotation of the fan blade part 23 drives gas in the gas driving part cavity 211 to flow in a first direction and a second direction, out of the gas driving part cavity 211 in the first direction and the second direction, and into the cooking cavity 101.

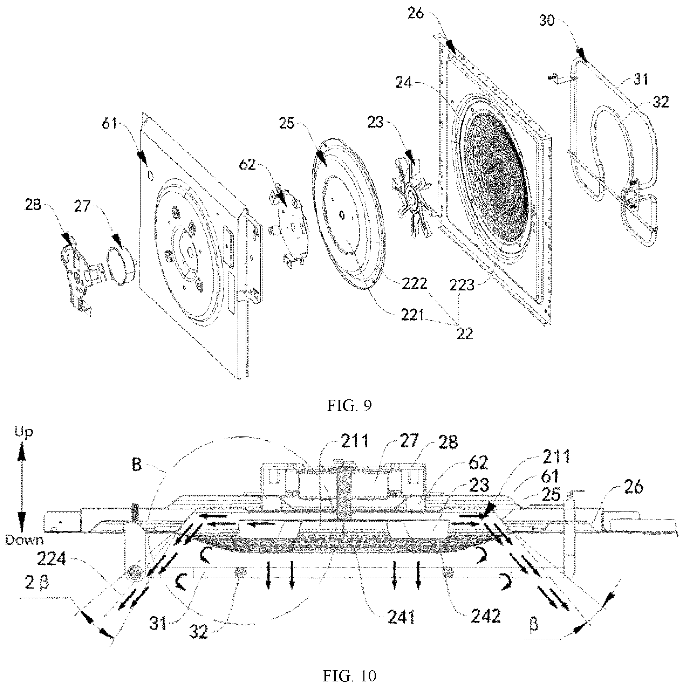

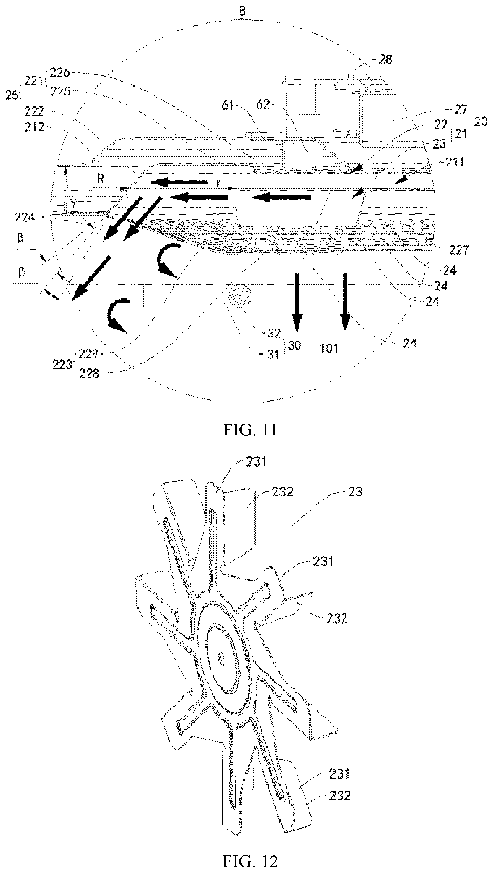

According to the invention, as shown in FIGS. 10 and 12, the fan blade part 23 comprises a horizontal fan blade part 231 and a vertical fan blade part 232. The upper end of the vertical fan blade part 232 is connected to the horizontal fan blade part 231, so that the fan blade generally forms an "L" shape. When the fan blade rotates, the gas flowing through the fan blade part 23 is pressed and accelerated, so that a part of the gas flows vertically downward, a part of the gas flows in the radial direction of the fan blade part 23, and a part of the gas flows in the circumferential direction of the fan blade part 23 by the fan blade due to viscosity. In addition, the fan blade part 23 comprises a fan blade disc, and the inner ends of the plurality of horizontal fan blades 231 are connected to the periphery of the fan blade disc, so that the gas can flow from the middle part to the fan blade part 23, and then flow through the horizontal fan blades 231 and the vertical fan blades 232 and out to achieve the gas circulation flow.

In the invention, as shown in FIGS. 10 and 11, there is an annular gap 212 between the fan blade part 23 and the periphery of the gas driving part cavity 211, so that adequate space is formed to allow adequate gas flow in the radial direction of the gas driving part 21. Moreover, the radial width of the annular gap 212 in the circumferential direction of the gas driving part cavity 211 is not constant. In other words, the radial width of annular gap 212 is uneven circumferentially throughout. In other words, the annular gap 212 comprises at least two or more sections, and the radial width of at least one

section of the annular gap 212 is not equal to the radial width of another section of the annular gap 212. The flow of gas in the annular gap 212 creates a circumferential pressure differential that further urges the gas to flow circumferentially, further enhancing the forced convection of the helical flow, thereby enhancing the gas convection effect.

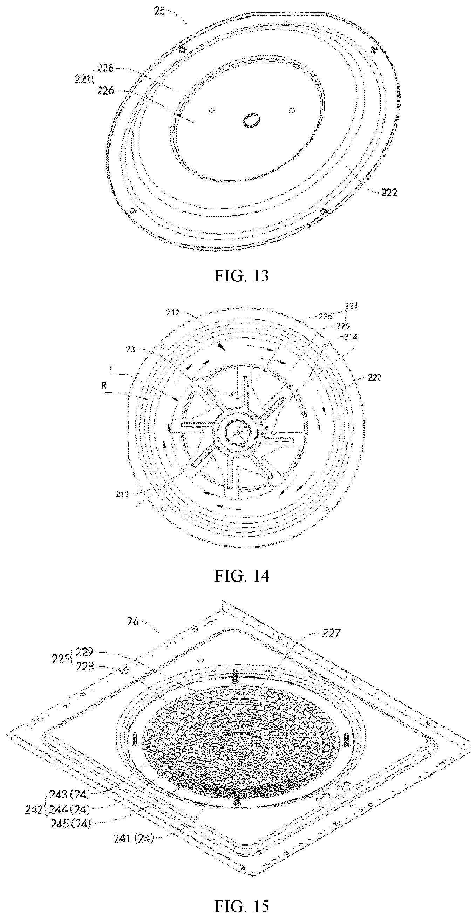

According to the invention, as shown in FIGS. 10 and 14, the fan blade part 23 and the gas driving part cavity 211 may be eccentrically disposed. In other words, the rotational axis of the fan blade part 23 does not coincide with the central axis of the gas driving part cavity 211. Thus, there is an uneven annular gap 212 between the periphery of the fan blade part 23 and the periphery of the gas driving part 21. For example, the gas driving part 21 comprises a driving cover body 22, the fan blade part 23 is mounted on a driving cover body top wall 221 of the driving cover body 22. The driving cover body top wall 221 is of a circular structure, and the mating relationship between the fan blade part 23 and the driving cover body top wall 221 is not concentric, namely, the two have a certain eccentric distance, so that the radial gap between the driving cover body side wall 222 of the driving cover body 22 and the fan blade part 23 is unevenly distributed.

According to the invention, as shown in FIGS. 11 and 14, the equivalent radius of the fan blade part 23 is r, in other words, the radius corresponding to the peripheral swept area during rotation of the fan blade part 23 may be r. The inner diameter of the periphery of the gas driving part cavity 211 is R, in other words, the radius of the periphery of the gas driving part cavity 211 at the same height as the equivalent radius r of the fan blade part 23 may be R. The eccentric distance between the rotational axis of the fan blade part 23 and the central axis of the gas driving part cavity 211 is e. The width of the annular gap 212 is C.

According to the invention, the following is fulfilled: 20 mm≤R-r≤30 mm, 0<e≤0.4(R-r), and 0.6(R-r)≤C≤1.4(R-r). Within the above value range, even if a pressure difference is generated in the gas in the annular gap 212 so as to promote the circumferential flow of the gas, the spiral flowing gas driven by the fan blade part 23 spirals downward, thereby forcibly improving the heat convection, and ensuring the normal operation of the fan blade part 23, reducing the probability of generating noise during the operation.

In some embodiments of the present application, as shown in FIG. 14, the annular gap 212 has a minimum gap 213 and a maximum gap 214, i.e., the minimum and maximum radial width. The minimum gap 213 and the maximum gap 214 are respectively located on two sides of the fan blade part 23, and the annular gap 212 is partitioned into two sections evenly varying from the minimum gap 213 to the maximum gap 214, so that the annular gap 212 generally forms a wedge-shaped gap, and the air pressure at the minimum gap 213 is large, and the air pressure at the maximum gap 214 is small, thereby forming a circumferential pressure difference, and pushing the gas to flow more smoothly in the circumferential direction between the minimum gap 213 and the maximum gap 214.

In some embodiments, the annular gap 212 has the maximum gap of smaller than or equal to 42 mm and to minimum gap of greater than or equal to 12 mm to avoid having a minimum gap that is too small to create abnormal noise and also to provide better circumferential gas flow due to pressure differences.

In other embodiments, which are not part of the present invention, the fan blade part 23 may be coaxially arranged with the gas driving part cavity 211, in other words, the rotational axis of the fan blade part 23 may coincide with the central axis of the gas driving part cavity 211. Moreover, the distance between the periphery of the gas driving part cavity 211 and the central axis of the gas driving part cavity 211 is not constant, so that the distance between the periphery of the gas driving part cavity 211 and the periphery of the fan blade part 23 is not constant. In some embodiments, which are not part of the present invention, the cross-section of the gas driving part cavity 211 may be elliptical, lemon-shaped, oil-filled wedge-shaped, or the like, to achieve an uneven radial gap of the periphery of the gas driving part cavity 211 to the fan blade part 23.

In some embodiments of the present application, as shown in FIG. 11, the gas driving part 21 may comprise the driving cover body 22 and the fan blade part 23. The gas driving part cavity 211 is formed at the driving cover body 22, and the fan blade part 23 is rotatably disposed in the driving cover body 22. Moreover, the driving cover body 22 may have a plurality of air holes 24 provided on the side surface of the driving cover body 22 facing towards the cooking cavity 101 of the cooking device 100, so that the gas in the gas driving part cavity 211 can be blown into the cooking cavity 101 through the plurality of air holes 24, the contact surface between the hot air and the food is the maximum contact surface of the food, and the hot air can heat the food in a larger area to achieve a better cooking effect, or the gas in the cooking cavity 101 may enter the gas driving part cavity 211 through the plurality of air holes 24. The driving cover body 22 plays a role of shielding the fan blade part 23 from being touched by human hands, and the plurality of air holes 24 further enhance the gas dispersion effect.

In some embodiments, as shown in FIGS. 11 and 13-14, the driving cover body 22 may comprise a driving cover body top wall 221 and a driving cover body side wall 222 connected to the driving cover body top wall 221 to form an "inverted basin" structure. The fan blade part 23 may be located below the driving cover body top wall 221, and the driving cover body side wall 222 is disposed around the fan blade part 23, a gap between the driving cover body side wall 222 and the fan blade part 23 is the annular gap 212, and the driving cover body side wall 222 can guide the radial and circumferential air blown by the fan blade part 23.

In some embodiments, as shown in FIGS. 10 and 11, the driving cover body side wall 222 may be formed as a divergent side wall, and the smaller diameter end of the driving cover body side wall 222 may be connected to the driving cover body top wall 221, and the larger diameter end of the driving cover body side wall 222 may be away from the driving cover body top wall 221. In other words, the inner diameter of the driving cover body side wall 222 increases in a direction facing away from the driving cover body top wall 221.

As a result, under the driving of the fan blade part 23, the gas in the gas driving part cavity 211 is divided into three kinds of flows: vertical downward flow, radial flow along the fan blade part 23, and circumferential flow along the fan blade part 23. The gas of radial flow along the fan blade part 23 first flows to the divergent driving cover body side wall 222, changes its flow direction after flowing through the driving cover body side wall 222, and then flows "straightly" in the cooking cavity 101 in the inclined direction of the driving cover body side wall 222, and may be blown to the side wall of the cooking cavity 101 and flow along the side wall, so as to smoothly flow to the gas guide structure 50. The gas of circumferential flow along the fan blade part 23 flows through the driving cover body side wall 222 in a spiral manner by the centrifugal force, changes its flow direction after flowing through the driving cover body side wall 222, and then flows in a spiral descending manner to the cooking cavity 101 through the air hole 24. The divergent driving cover body side wall 222 allows for more adequacy and greater coverage of heat convection, as well as more even temperature distribution in the cooking cavity 101.

In some embodiments, as shown in FIG. 11, an comprised angle γ between the driving cover body side wall 222 and the cross section surface of the cooking cavity 101 may range from 15° to 75°. In the above angular range, the air loss is small when the gas is blown to the driving cover body side wall 222, and the gas flowing through the driving cover body side wall 222 can more smoothly flow through the heating apparatus 30 and towards the side wall of the cooking cavity 101, thereby achieving forced convection of hot air. For example, the comprised angle γ may be 15°, 20°, 30°, 40°, 45°, 50°, 60°, and 70° etc.

In the invention, as shown in FIGS. 9-11, the cooking device 100 comprises a heating apparatus 30. The heating apparatus 30 may be disposed in the cooking cavity 101 and adjacent to the driving cover body 22. The driving cover body side wall 222 has a virtual extension surface 224 extending towards the cooking cavity 101. Taking the large diameter end of the driving cover body side wall 222 as a fulcrum, the range formed by the virtual extension surface 224 deflecting a predetermined small angle β to two sides of the virtual extension surface 224 is a predetermined range, and the peripheral edge of the heating apparatus 30 does not exceed the predetermined range. In other words, the peripheral edge of the heating apparatus 30 is located in the horizontal projection range of the predetermined range of the virtual extension surface 224. In this way, the gas flowing through the driving cover body side wall 222 flows out of the driving cover body 22 generally along the virtual extension surface 224 and can be directly blown towards the heating apparatus 30 so as to be adequately heated by the heating apparatus 30 and then come into contact with the food in the cooking cavity 101, thereby improving the heat exchange effect. The heat of the heating apparatus 30 is adequately brought into the cooking cavity 101 to form a heat convection, so as to achieve rapid dehydration of the surface of the food.

In some embodiments, the small angle β may satisfy the relationship: 0°<β≤10°. When the value of the small angle β is too large, it is likely that part of the gas enters the cooking cavity 101 without flowing through the heating apparatus 30. In the above range, the heat exchange efficiency between the gas and the heating apparatus 30 is improved. For example, the small angle β may be 1°, 3°, 5°, 7°, and 9° etc.

In some embodiments of the present application, as shown in FIGS. 11 and 13, the driving cover body top wall 221 may comprise an outer annular top wall 225 and a middle part top wall 226, and the outer annular top wall 225 surrounds and connects the middle part top wall 226. The axial distance of the outer annular top wall 225 from the fan blade part 23 is greater than the axial distance of the middle part top wall 226 from the fan blade part 23. In other words, the outer annular top wall 225 extends in a direction facing away from the fan blade part 23 to form an upward first contour, and the middle part top wall 226 extends in a direction towards the fan blade part 23 to form a downward second contour, to facilitate avoiding and mounting components (such as the driving motor 27) above the driving cover body 22. The outer annular top wall 225 increases the local axial dimension of the gas driving part cavity 211 to ensure adequate radial gas flow space and to increase the structural strength of the driving cover body top wall 221.

In some embodiments, as shown in FIGS. 10 and 14, an interface of the outer annular top wall 225 and the middle part top wall 226 may correspond to the periphery of the fan blade part 23, here, "corresponding" is to be understood in a broad sense that the projection of the interface of the outer annular top wall 225 and the middle part top wall 226 onto the periphery of the fan blade part 23 in a horizontal plane may coincide completely or may be offset by a small distance in a horizontal direction. In this way, most of the outer annular top wall 225 is located radially outside of the fan blade part 23, adequate radial gas flow space and adequate radial width of the annular gap 212 are ensured.

In some embodiments, as shown in FIGS. 10 and 13, the driving cover body top wall 221 and the driving cover body side wall 222 are integrated to form an air deflector 25. The driving cover body top wall 221 and the driving cover body side wall 222 do not need to be assembled, there is no mating gap, gas leakage is avoided, and the structure is simpler.

In some embodiments of the present application, as shown in FIGS. 10-11, and 15-18, the driving cover body 22 may comprise a driving cover body bottom wall 223. The driving cover body bottom wall 223 may be connected to an end of the driving cover body side wall 222 facing away from the driving cover body top wall 221, and a plurality of air holes 24 may be formed in the driving cover body bottom wall 223. The driving cover body bottom wall 223, the driving cover body side wall 222, and the driving cover body top wall 221 cooperate to define the gas driving part cavity 211, and the gas driving part cavity 211 can interact with the gas in the cooking cavity 101 through a plurality of air holes 24 on the lower side.

In some embodiments, as shown in FIG. 11, the driving cover body bottom wall 223 may protrude in a direction facing away from the driving cover body top wall 221 so that an inner concave cavity body 227 is formed at a side surface of the driving cover body bottom wall 223 facing towards the driving cover body top wall 221, and the inner concave cavity body 227 is configured as a part of the gas driving part cavity 211 in the gas driving part 21. The inner concave cavity body 227 increases the space size of the gas driving part cavity 211, ensuring that the gas may flow more adequately in the circumferential and radial direction of the fan blade part 23.

In some embodiments, the maximum depth of the inner concave cavity body 227 is not smaller than 10 mm, and the gas flow space is more abundant, e.g., may be 10 mm, 12 mm and 15 mm, etc.

In some particular embodiments, at least a portion of the fan blade part 23 may intrude into the inner concave cavity body 227, which is conductive to facilitating the fan blade part 23 to drive gas out the air holes 24 and making the structure more compact.

In some embodiments of the present application, the driving cover body side wall 222 may also be provided with a throttling protrusion protruding close to the fan blade part 23, for example, the throttling protrusion may be a throttling contour or a raised rib provided on the driving cover body side wall 222, so as to further increase the flow velocity of the gas after flowing through the driving cover body side wall 222, which is conducive to improving the heat convection effect and the effect of the gas flowing towards the lower surface of the food.

In some embodiments of the present application, as shown in FIGS. 9 and 10, the gas circulation apparatus 20 may further comprise a driving motor 27 that may be connected to the gas driving part 21 and configured to drive the gas driving part 21 to work. The driving motor 27 may be mounted on top of the gas driving part 21 to avoid affecting the gas flow.

In some embodiments of the present application, as shown in FIGS. 9 and 10, the cooking device 100 may further comprise a heat insulation plate 61, which may be disposed between the driving motor 27 and the gas driving part 21, to prevent the heat of the heating apparatus 30 from affecting the driving motor 27, and avoid the temperature of the driving motor 27 being too high to damage it or even cause a safety accident, thereby improving the safety in use.

In addition, with continued reference to FIG. 10, the heat insulation plate 61 may be connected to the gas driving part 21 via a heat insulation plate support 62 to secure the heat insulation plate 61, and a gap may be provided between the heat insulation plate 61 and the gas driving part 21 to facilitate the reduction of heat transfer and to facilitate the disposing of heat insulation material in the gap to further enhance the heat insulation effect. The driving motor 27 may be connected to the heat insulation plate 61 via the motor support 28, the driving motor 27 is fixed and stable, and the direct contact between the driving motor 27 and the heat insulation plate 61 is avoided, thereby further improving the heat insulation effect.

In some particular embodiments, as shown in FIGS. 9-11, the cooking device 100 may comprise a top plate 26 formed as a cavity top wall of the cooking cavity 101. Moreover, a portion of the top plate 26 may be contoured downward to form the driving cover body bottom wall 223, in other words, the driving cover body bottom wall 223 is integrally formed with the top plate 26. The air deflector 25 is disposed above and connected to the top plate 26 to define the gas driving part cavity 211. The heat insulation plate 61 is disposed above the top plate 26, the heat insulation plate support 62 is disposed between the middle part of the heat insulation plate 61 and the air deflector 25, the periphery of the heat insulation plate 61 is connected to the top plate 26, and the middle part is connected to the air deflector 25 via the heat insulation plate support 62. The driving motor 27 is disposed above the heat insulation plate 61, and a motor shaft of the driving motor 27 passes through the heat insulation plate 61, the heat insulation plate support 62 and the air deflector 25 to be connected to the fan blade part 23. The motor support 28 is covered above the driving motor 27 and connected to the heat insulation plate 61, so as to achieve the mounting of the driving motor 27 and play a shielding and protection role for the driving motor 27.

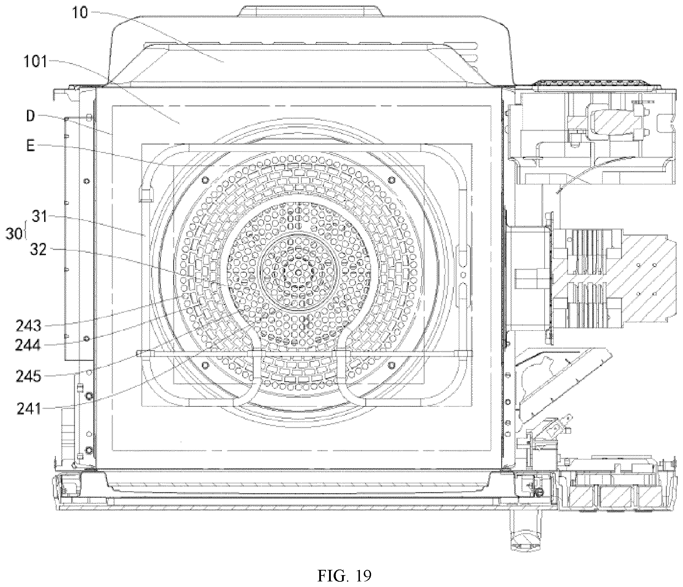

In some embodiments of the present application, as shown in FIGS. 11 and 19, the side surface of the driving cover body 22 facing towards the cooking cavity 101 may have a plurality of air holes 24 through which the gas in the gas driving part cavity 211 may be blown into the cooking cavity 101. The cooking device 100 may further comprise a heating apparatus 30, which may be disposed in the cooking cavity 101, in other words, on the lower side of the driving cover body 22. Moreover, the heating apparatus 30 is adjacent to the plurality of air holes 24 so that the gas blown through the air holes 24 can be directly heated by the heating apparatus 30 and then blown to the food.

As shown in FIGS. 9 and 19, the heating apparatus 30 may comprise an outer peripheral heating apparatus 31, and the area enclosed by the outer peripheral heating apparatus 31 may account for at least half of a cross-sectional area of the cooking cavity 101, so as to form a large area of heating in the cooking cavity 101, thereby improving the heating effect of the heating apparatus 30 on the gas, and contributing to improving the evenness of the hot air.

The cooking device 100 according to the embodiment of the present application, by disposing a plurality of air holes 24 in the driving cover body 21, and the area enclosed by the outer peripheral heating apparatus 31 accounts for at least half of the cross-sectional area of the cooking cavity 101, a large area of heating may be formed in the cooking cavity 101, food can be cooked in a greater range, and the evenness of the hot air can be improved; and the air holes 24 cooperate with the heating apparatus 30 to make hot air and barbecue better.

In some embodiments, and with continued reference to FIG. 19, the area enclosed by the outer peripheral heating apparatus 31 may account for one-half to three-quarters of the cross-sectional area of the cooking cavity 101. A range of one-half of the cross-sectional area of the cooking cavity 101 is shown at a block E in FIG. 19, and a range of three-quarters of the cross-sectional area of the cooking cavity 101 is shown at a block D. The area enclosed by the outer peripheral heating apparatus 31 is within the above range, which not only ensures a large heating area, but also avoids the heating apparatus 30 being too close to the side wall of the cooking cavity 101 to affect the gas flow, and also ensures the heating effect on the gas in the middle part of the area enclosed by the heating apparatus 30.

In some embodiments of the present application, as shown in FIGS. 11 and 19, the heating apparatus 30 may further comprise an inner peripheral heating apparatus 32. The outer peripheral heating apparatus 31 surrounds the inner peripheral heating apparatus 32, and the inner peripheral heating apparatus 32 may heat the gas in the middle part of the area enclosed by the outer peripheral heating apparatus 31, ensuring the heating evenness throughout a larger heating area.

As shown in FIG. 19, the inner peripheral heating apparatus 32 and the outer peripheral heating apparatus 31 may be connected in series; in other words, the inner peripheral heating apparatus 32 and the outer peripheral heating apparatus 31 may be integrally formed, which is easier to process; and the working states of the inner peripheral heating apparatus 32 and the outer peripheral heating apparatus 31 may be controlled simultaneously, which is simple and convenient to control and easy to mount. Alternatively, the inner peripheral heating apparatus 32 and the outer peripheral heating apparatus 31 may be connected in parallel, in other words, the inner peripheral heating apparatus 32 and the outer peripheral heating apparatus 31 may be composed of different heating tubes, so as to facilitate the shape machining and mounting position disposing of each heating tube, and to facilitate the control of the working states of the inner peripheral heating apparatus 32 and the outer peripheral heating apparatus 31 respectively, so as to satisfy more heating requirements.

In the embodiment of the present application, the material of the heating apparatus 30 may be flexibly disposed according to practical situations. For example, the heating apparatus 30 may be made of metal, quartz, graphene, etc.

In the embodiment of the present application, the shape of the outer peripheral heating apparatus 31 comprises, but is not limited to, a square as shown in FIG. 19, and the shape of the inner peripheral heating apparatus 32 comprises, but is not limited to, a circle as shown in FIG. 19. For example, the outer peripheral heating apparatus 31 and the inner peripheral heating apparatus 32 may also be polygonal, etc.

For a cooking cavity 101 with a square cross-section, the square shape of the outer peripheral heating apparatus 31 facilitates a larger hot air area. The inner peripheral heating apparatus 32 may have a central symmetrical structure to achieve a better large area hot air heating effect.

In some embodiments, as shown in FIG. 19, each of the outer peripheral heating apparatus 31, the inner peripheral heating apparatus 32 is arranged around the central axis of the cooking cavity 101 to improve temperature evenness throughout the circumference of the cooking cavity 101.

In some embodiments of the present application, the total area of the plurality of air holes 24 may account for at least half of the cross-sectional area of the cooking cavity 101 to increase the gas flow area, ensure the efficiency of the gas into and out of the cooking cavity 101, improve the cooking effect and heat convection evenness.

In addition, the total area of the plurality of air holes 24 may account for one-half to two-thirds of the cross-sectional area of the cooking cavity 101, to avoid that the total area of the plurality of air holes 24 is too large to make machining difficult or the structural strength of the driving cover body 22 is deteriorated.

In some embodiments, as shown in FIGS. 15-18, the plurality of air holes 24 may comprise return air holes 241 and outlet air holes 242. The outlet air holes 242 are disposed around the return air holes 241 so as to achieve middle part air return and surrounding air outlet, and the air flowing out from the outlet air hole 242 can adequately exchange heat with the heating apparatus 30, and can more easily enhance the heat convection effect in the sealed cooking cavity 101 so as to achieve a better cooking effect and evenness.

In some embodiments, the plurality of air holes 24 may be arranged coaxially or diffusely.

In some particular embodiments, as shown in FIGS. 15-17, the outlet air hole 242 may comprise a first ring of outlet air holes 243, a second ring of outlet air holes 244, and a third ring of outlet air holes 245. The first ring of outlet air holes 243 may be disposed around the second ring of outlet air holes 244, and the second ring of outlet air holes 244 may be disposed around the third ring of outlet air holes 245. Each ring of outlet air holes may comprise at least one ring of outlet air hole groups, each ring of outlet air hole groups comprising a plurality of outlet air holes 242 distributed at intervals along the circumferential direction of the driving cover body 22, and the plurality of rings of outlet air hole groups may be distributed at intervals along the radial direction of the driving cover body 22.

The air pressure of the gas blown out through the first ring of outlet air holes 243 may be greater than the air pressure of the gas blown out through the second ring of outlet air holes 244, so that a pressure difference is formed, namely, the air volume of the outer ring is fast, the air pressure is large, the air volume of the central position is small, and the air pressure is low, so that a fast circulating hot air can be formed in the cooking cavity 101.

The area of each air hole 24 in the first ring of outlet air holes 243 may be smaller than the area of each air hole 24 in the second ring of outlet air holes 244, so that the flow velocity of the gas blown out from air hole 24 of the first ring of outlet air holes 243 is greater than the flow velocity of the gas blown out from the air hole 24 of the second ring of outlet air holes 244, and the air volume in the outer ring is fast and the air pressure is large, and the air volume in the inner ring is small and the air pressure is low. The gas blown out from the outer ring can form a forced heat convection, form a more stable gas flow channel, and flow through a longer path, which is easy to flow along the side wall of the cooking cavity 101 and the gas guide structure 50 into the gas flow channel 401, thereby achieving heating of the lower surface of the food. While, the gas blown out from the inner ring can be brought into contact with the heating apparatus 30 for a longer time to perform a more adequate heat exchange, thereby heating the food more adequately by the upper surface and the side surface of the food. The first ring of outlet air holes 243 cooperates with the second ring of outlet air holes 244 to facilitate the all-round three-dimensional heating of food and ensure the consistency of coloring.

The area of each air hole 24 in the third ring of outlet air holes 245 may be smaller than the area of each air hole 24 in the second ring of outlet air holes 244, so that the gas blown out from the air hole 24 of the third ring of outlet air holes 245 has a fast flow velocity and a large air pressure. In fact, the air hole 24 near the interface of the outlet air hole 242 and the return air hole 241 does not have a very obvious boundary for the return air or the outlet air due to the actual error, the rotation speed of the fan blade part 23, etc. namely, the portion of the air hole 24 near the middle part of the outlet air hole 242 may be used for the return air, or the portion of the air hole 24 near the periphery of the return air hole 241 may be used for the outlet air. By spacing the second ring of outlet air holes 244 and the return air hole 241 through the third ring of outlet air holes 245, and reducing the area of the third ring of outlet air holes 245, the above error effect may be weakened, and the return air may be avoided from affecting the air outlet of the second ring of outlet air holes 244, which is conducive to improving the heat exchange effect and the effect of hot air circulation.

In some embodiments, the area of each air hole 24 in the return air holes 241 is smaller than the area of each air hole 24 in the second ring of outlet air holes 244, so that the return air of the return air hole 241 has a fast return air velocity and a large air pressure, ensuring the balance between the outlet air and the return air, and facilitating the circulation of hot air.

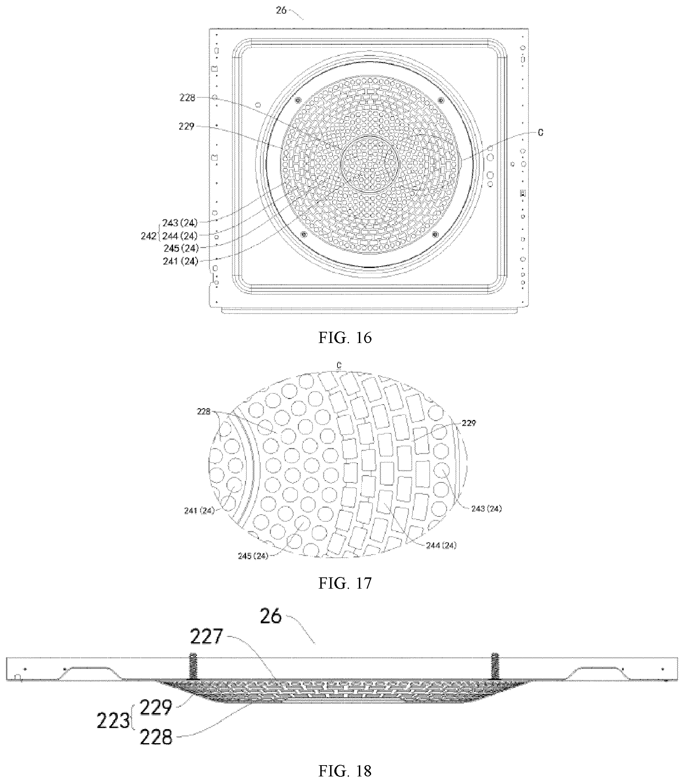

It should be noted that the shape of each air hole 24 is not limited, and may be circular, square, trapezoidal, polygonal, irregular, etc. The arrangement shape of each ring of the outlet air hole groups comprises, but is not limited to, circle, square, polygon, etc. In FIG. 17, the air holes 24 in the first ring of outlet air holes 243, the third ring of outlet air holes 245 and the return air hole 241 are circular, and the air hole 24 in the second ring of outlet air holes 244 is square for illustrative purposes only, not limiting the shape of each air hole 24.

In some embodiments of the present application, the ratio of the total area of the outlet air hole 242 to the total area of the return air hole 241 may be any value in the range of three to one-quarter, and in particular, may be three, two, one, one-half, one-third, one-quarter, etc. Within the above ratio range, it is easy to ensure the balance of the inlet air and the return air, thereby facilitating the hot air circulation.

In some embodiments of the present application, as shown in FIGS. 15-18, the driving cover body 22 may comprise the driving cover body bottom wall 223, which may comprise a driving cover body central bottom wall 228 and a driving cover body peripheral bottom wall 229 disposed around the driving cover body central bottom wall 228.

At least a part air holes of the first ring of outlet air holes 243 and the second ring of outlet air holes 244 may be disposed on the driving cover body peripheral bottom wall 229 to outlet air from the side, a portion of the gas blown out may be blown outwards and downwards towards the side wall of the cooking cavity 101 so as to easily flow towards the lower side of the food, and the other portion may spiral downwards and be blown towards the upper surface and the side surface of the food after adequate heat exchange with the heating apparatus 30. At least a part air holes of the third ring of outlet air holes 245 may be disposed on the driving cover body central bottom wall 228 to outlet air from the bottom surface, and the gas blown out may flow downwards and rapidly contact with the upper and side surfaces of the food. At least a part air holes of the return air holes 241 may be disposed on the driving cover body central bottom wall 228 to facilitate return air and gas circulation.

In some embodiments, as shown in FIGS. 15-18, the driving cover body central bottom wall 228 may be a flat bottom wall, and the driving cover body peripheral bottom wall 229 may be a divergent bottom wall. The small diameter end of the driving cover body peripheral bottom wall 229 is connected to the driving cover body central bottom wall 228, and the large diameter end of the driving cover body peripheral bottom wall 229 is located on the upper side of the driving cover body central bottom wall 228, so that the driving cover body bottom wall 223 is formed into a basin shape, thereby forming the inner concave cavity body 227 on the upper side of the driving cover body bottom wall 223. The space size of the gas driving part cavity 211 in the driving cover body 22 is increased, and the gas may flow more adequately in the circumferential direction and the radial direction of the fan blade part 23 is ensured. Moreover, the driving cover body peripheral bottom wall 229 extending obliquely can reduce the resistance to the gas and reduce the air volume loss.

Here, the term "flat bottom wall" is to be understood in a broad sense, and the driving cover body central bottom wall 228 may be a bottom wall extending in a horizontal plane, or a bottom wall having a small dimension bend or arc. For example, in the examples comprised as shown in FIGS. 15-18, the middle part of the driving cover body central bottom wall 228 may be formed with a small size contour upward, the middle part contoured portion may be provided with a return air hole 241, and the other peripheral portion may be provided with a third ring of outlet air holes 245.

In some embodiments in which the heating apparatus 30 comprises an inner peripheral heating apparatus 32, as shown in FIG. 19, the interface between the second ring of outlet air holes 244 and the third ring of outlet air holes 245 may correspond to the inner peripheral heating apparatus 32, so that the inner peripheral heating apparatus 32 can adequately heat the gas blown out through the second ring of outlet air holes 244 and the third ring of outlet air holes 245, thereby improving the heat exchange efficiency, and the air resistance generated by the inner peripheral heating apparatus 32 provided at the interface is small and negligible, which is conducive to improving the adequacy of heat convection.

In some embodiments of the present application, as shown in FIG. 1, the cooking device 100 may further comprise a microwave transmitter 63 for emitting microwaves for microwave heating of food in the cooking cavity 101. The cooking device 100 has both a hot air heating function and a microwave heating function, and functions are more diverse. The microwave transmitter 63 may be provided at a side part of the housing 10, and the gas circulation apparatus 20 may be provided at a top part of the housing 10, so as to make full use of the space inside the housing 10, make the structure more compact, and make the outer appearance of the cooking device 100 less bulky.

In some embodiments, as shown in FIG. 1, the cooking device 100 may further comprise a control panel 64 through which a user may control the switching between the hot air heating function and the microwave heating function, as well as the working states of the respective components under the two heating functions, and the like.

With reference to FIGS. 1-19, the cooking device 100 according to some embodiments of the present application may comprise: a housing 10, a gas circulation apparatus 20, a heating apparatus 30, a shelf apparatus 40 and a gas guide structure 50. The housing 10 may have the cooking cavity 101, the gas circulation apparatus 20 may be disposed on the housing 10, and the gas circulation apparatus 20 may be configured to drive gas in the cooking cavity 101 to flow and circulate. The heating apparatus 30 is disposed in the cooking cavity 101 to heat the gas in the cooking cavity 101. The shelf apparatus 40 may comprise the bottom shelf 42 and the top shelf 41 disposed above the bottom shelf 42, the gap is formed between the top shelf 41 and the bottom shelf 42, and the gas is formed as the gas flow channel 401 located below the top shelf 41. The gas guide structure 50 may guide gas blown out by the gas circulation apparatus 20 to flow into the gas flow channel 401 and then pass through the top shelf 41.

In the related art, the hot air heating effect of a device with a hot air function (such as a microwave oven) is poor, in which the heat convection is inadequate and uneven, and takes too long time, resulting in uneven coloring, the upper surface of the food being extremely easy to burn, while the lower surface of the food being easily unable to be dehydrated and colored; and the volume of the hot air system thereof is large, so that the volume of the device itself is also large, otherwise the hot air effect and the size of the cooking cavity are affected.

However, in the embodiment of the present application, when the gas circulation apparatus 20 works, the gas is circulated in the cooking cavity 101, and the heating apparatus 30 is located in the air duct and can heat the gas flowing therethrough. A portion of the heated gas can enter the top shelf 41 directly from the upper side; a portion of the heated gas enters the gas flow channel 401 under the guidance of the gas guide structure 50 and then enters into the top shelf 41 through the lower portion of the top shelf 41 to form a full range of three-dimensional heating of the food from the bottom, sides and top. Meanwhile, the cooking cavity 101 is partitioned into two sections by the shelf apparatus 40 to increase the heat density of the upper space, thereby achieving an excellent cooking effect.

The housing 10, the gas circulation apparatus 20, the heating apparatus 30, the shelf apparatus 40 and the gas guide structure 50 cooperate to form an inner hot air duct in the cooking cavity 101. In the case of a certain contour volume of the cooking device 100 (for example, making the contour volume of the cooking device 100 the same as that of an existing microwave oven), the cooking effect of the cooking device 100 in terms of air frying may be greatly improved; the forced heat convection occurs more adequately; the temperature field distribution is more even; the heating evenness and the coloring consistency of food can be easily achieved; the cooking time can be greatly shortened; the excellent effect of cooking with a large amount of food can be satisfied; the temperature monitoring data can more accurately reflect the heating temperature of the food to achieve accurate control of the heating process. Besides there is also no need to increase the volume of the cooking device 100, thereby maintaining the overall aesthetics of the cooking device 100, and reducing the occupied space.

Other particular structures and beneficial effects of the cooking device 100 according to an embodiment of the present application can be described with reference to the foregoing embodiments, and will not be described in detail herein.

Other configurations and operations of the shelf apparatus 40 and cooking device 100 according to the embodiment of the present application are known to those of ordinary skill in the art and will not be described in detail herein.

In the description of the present application, it should be noted that, unless expressly specified and limited otherwise, the terms "mounted", "communicated", and "connected" are to be interpreted broadly, e.g., either fixedly or detachably, or integrally; may be mechanically connected or an electrically connected; may be directly connected or indirectly connected via an intermediate medium, and may be the communication between two elements. For a person of ordinary skill in the art, the specific meaning of the above terms in the present application can be understood in detail.

While embodiments of the present application have been shown and described, it will be appreciated by those of ordinary skill in the art that numerous changes, modifications, substitutions and variations can be made to these embodiments. The scope of the invention is defined by the claims.

## Claims

1. A cooking device (100), comprising:
a housing (10) having a cooking cavity (101);
a gas circulation apparatus (20) disposed in the housing (10) and at the top of the cooking cavity (101) and driving a gas in the cooking cavity (101) to flow and circulate, the gas circulation apparatus (20) comprising a gas driving part (21),
a heating apparatus (30); wherein the gas circulation apparatus (20) and the heating apparatus (30) at the top of the cooking cavity (101) continuously supply hot air to form a full range of three-dimensional heating on the bottom, top and side of food, achieving an excellent cooking effect,
wherein the gas driving part (21) has a gas driving part cavity (211) provided therein, the gas driving part (21) comprising a fan blade part (23) at least partially disposed in the gas driving part cavity (211),
wherein the fan blade part (23) comprises a horizontal fan blade part (231) and a vertical fan blade part (232),
wherein an upper end of the vertical fan blade part (232) is connected to the horizontal fan blade part (231), so that the fan blade part (23) generally forms an "L" shape;
such that, when driven by the gas driving part (21),
the gas has a first part flowing in a first direction and a second part flowing in a second direction, one of the first direction and the second direction being a circumferential direction of the gas driving part (21), and the other of the first direction and the second direction being a radial direction of the gas driving part (21),
wherein the fan blade part (23) further comprises a fan blade disc, and the inner ends of the plurality of horizontal fan blades (231) are connected to the periphery of the fan blade disc, so that the gas can flow from the middle part to the fan blade part (23), and then
flow through the horizontal fan blades (231) and the vertical fan blades (232),
wherein the cooking device (100) has an annular gap (212) between the fan blade part (23) and a periphery of the gas driving part cavity (211) having a radial width that is not constant in the circumferential direction of the gas driving part cavity (211),
**characterized in that**
the fan blade part (23) is disposed eccentrically with the gas driving part cavity (211),
wherein
an equivalent radius of the fan blade part (23) is r;
a radius of a periphery of the gas driving part cavity (211) is R;
an eccentric distance between the rotational axis of the fan blade part (23) and the central axis of the gas driving part cavity (211) is e; and the width of the annular gap (212) is C, where 20 mm ≤ R-r ≤ 30 mm, 0 < e ≤ 0.4(R-r), and 0.6 (R-r) ≤ C ≤ 1.4(R-r).

2. The cooking device (100) according to claim 1, wherein the annular gap (212) has a minimum gap (213) and a maximum gap (214) which are respectively located at two sides of the fan blade part (23), the annular gap (212) being divided into two sections evenly varying from the minimum gap (213) to the maximum gap (214);
wherein preferably:
the maximum gap (214) is smaller than or equal to 42 mm; and
the minimum gap (213) is greater than or equal to 12 mm.

3. The cooking device (100) according to any of claims 1 or 2, wherein the gas driving part (21) comprises:
a driving cover body (22) having a plurality of air holes (24) on a side surface of the driving cover body (22), wherein the side surface of the driving cover body (22) facing towards the cooking cavity (101) of the cooking device (100); and
a fan blade part (23) rotatably arranged in the driving cover body (22).

4. The cooking device (100) according to claim 3, wherein the driving cover body (22) comprises:
a driving cover body top wall (221); and
a driving cover body side wall (222) connected to the driving cover body top wall (221), the fan blade part (23) being located below the driving cover body top wall (221) and surrounded by the driving cover body side wall (222).

5. The cooking device (100) according to claim 4, wherein:
the driving cover body side wall (222) is formed as a divergent side wall;
a small diameter end of the driving cover body side wall (222) is connected to the driving cover body top wall (221); and
a large diameter end of the driving cover body side wall (222) is away from the driving cover body top wall (221).

6. The cooking device (100) according to claim 5, wherein the heating apparatus (30) is arranged in the cooking cavity (101) and adjacent to the driving cover body (22), wherein the driving cover body side wall (222) has a virtual extension surface (224) extending towards the cooking cavity (101), wherein a range formed by deflecting a predetermined small angle β towards two sides of the virtual extension surface (224) with the large diameter end of the driving cover body side wall (222) as a fulcrum is a predetermined range, and wherein a peripheral edge of the heating apparatus (30) does not exceed the predetermined range; wherein preferably the small angle β satisfies a relationship: 0°<β≤10°.

7. The cooking device (100) according to claim 5 or 6, wherein an included angle γ formed between the driving cover body side wall (222) and a cross section surface of the cooking cavity (101) ranges from 15° to 75°.

8. The cooking device (100) according to any of claims 4 to 7, wherein the driving cover body top wall (221) comprises a middle part top wall (226) and an outer annular top wall (225) circumferentially connected to the middle part top wall (226), an axial distance between the outer annular top wall (225) and the fan blade part (23) being greater than an axial distance between the middle part top wall (226) and the fan blade part (23); wherein preferably an interface of the outer annular top wall (225) and the middle part top wall (226) corresponds to a periphery of the fan blade part (23).

9. The cooking device (100) according to any of claims 5 to 8, wherein a wind deflector is formed by integrally forming the driving cover body top wall (221) and the driving cover body side wall (222).

10. The cooking device (100) according to any of claims 4 to 9, wherein the driving cover body (22) comprises a driving cover body bottom wall (223) connected to an end of the driving cover body side wall (222) facing away from the driving cover body top wall (221), the plurality of air holes (24) being formed at the driving cover body bottom wall (223).

11. The cooking device (100) according to claim 10, wherein the driving cover body bottom wall (223) protrudes, in a direction facing away from the driving cover body top wall (221), to form an inner concave cavity body (227) at a side of the driving cover body bottom wall (223) facing towards the driving cover body top wall (221), the inner concave cavity body (227) being configured as a part of the gas driving part cavity (211) in the gas driving part (21).

12. The cooking device (100) according to claim 11, wherein a maximum depth of the inner concave cavity body (227) is not smaller than 10 mm, and/or wherein at least a part of the fan blade part (23) extends into the inner concave cavity body (227).

13. The cooking device (100) according to any of claims 1 to 12, wherein the gas circulation apparatus (20) further comprises a driving motor (27) connected to the gas driving part (21), the driving motor (27) being mounted at a top of the gas driving part (21); wherein preferably the cooking device (100) further comprising a heat insulation plate (61) disposed between the driving motor (27) and the gas driving part (21), wherein:
the heat insulation plate (61) is connected to the gas driving part (21) through a heat insulation plate support (62); and
the driving motor (27) is connected to the heat insulation plate (61) through a motor support (28).

## Patentansprüche

1. Kochvorrichtung (100), umfassend:
ein Gehäuse (10), das einen Garraum (101) aufweist;
eine Gaszirkulationsvorrichtung (20), die in dem Gehäuse (10) und an der Oberseite des Garraums (101) angeordnet ist und ein Gas in dem Garraum (101) zum Strömen und Zirkulieren antreibt, wobei die
Gaszirkulationsvorrichtung (20) ein Gasförderteil (21) umfasst,
eine Heizvorrichtung (30); wobei die Gaszirkulationsvorrichtung (20) und die Heizvorrichtung (30) an der Oberseite des Garraums (101) kontinuierlich Heißluft zuführen, um eine vollständige dreidimensionale Erwärmung an der Unterseite, der Oberseite und der Seite eines Garguts zu erzeugen, wodurch eine ausgezeichnete Garwirkung erzielt wird,
wobei das Gasförderteil (21) einen darin vorgesehenen Gasförderteil-Hohlraum (211) aufweist, wobei das Gasförderteil (21) ein Lüfterflügelteil (23) umfasst, das zumindest teilweise in dem Gasförderteil-Hohlraum (211) angeordnet ist,
wobei das Lüfterflügelteil (23) ein horizontales Lüfterflügelteil (231) und ein vertikales Lüfterflügelteil (232) umfasst,
wobei ein oberes Ende des vertikalen Lüfterflügelteils (232) mit dem horizontalen Lüfterflügelteil (231) verbunden ist, so dass das Lüfterflügelteil (23) im Allgemeinen eine "L"-Form bildet;
so dass das Gas, wenn es durch das Gasförderteil (21) angetrieben wird, einen ersten Teil aufweist, der in einer ersten Richtung strömt, und einen zweiten Teil aufweist, der in einer zweiten Richtung strömt, wobei eine von der ersten Richtung und der zweiten Richtung eine Umfangsrichtung des Gasförderteils (21) ist und die andere von der ersten Richtung und der zweiten Richtung eine Radialrichtung des Gasförderteils (21) ist,
wobei das Lüfterflügelteil (23) ferner eine Lüfterflügelscheibe umfasst und die inneren Enden der Mehrzahl horizontaler Lüfterflügel (231) mit dem Umfang der Lüfterflügelscheibe verbunden sind, so dass das Gas von dem Mittelteil zu dem Lüfterflügelteil (23) strömen und anschließend durch die horizontalen Lüfterflügel (231) und die vertikalen Lüfterflügel (232) strömen kann,
wobei die Kochvorrichtung (100) zwischen dem Lüfterflügelteil (23) und einem Umfang des Gasförderteil-Hohlraums (211) einen Ringspalt (212) mit einer radialen Breite aufweist, die in der Umfangsrichtung des Gasförderteil-Hohlraums (211) nicht konstant ist,
**dadurch gekennzeichnet, dass**
das Lüfterflügelteil (23) exzentrisch relativ zu dem Gasförderteil-Hohlraum (211) angeordnet ist,
wobei
ein äquivalenter Radius des Lüfterflügelteils (23) r beträgt;
ein Radius eines Umfangs des Gasförderteil-Hohlraums (211) R beträgt; ein Exzentrizitätsabstand zwischen der Drehachse des Lüfterflügelteils (23) und der Mittelachse des Gasförderteil-Hohlraums (211) e beträgt; und die Breite des Ringspalts (212) C beträgt,
wobei 20 mm ≤ R-r ≤ 30 mm, 0 < e ≤ 0,4(R-r) und 0,6(R-r) ≤ C ≤ 1,4(R-r).

2. Kochvorrichtung (100) nach Anspruch 1, wobei der Ringspalt (212) einen minimalen Spalt (213) und einen maximalen Spalt (214) aufweist, die jeweils an einer von zwei Seiten des Lüfterflügelteils (23) angeordnet sind, wobei der Ringspalt (212) in zwei Abschnitte unterteilt ist, die sich gleichmäßig von dem minimalen Spalt (213) zu dem maximalen Spalt (214) verändern;
wobei bevorzugt:
der maximale Spalt (214) kleiner oder gleich 42 mm ist; und
der minimale Spalt (213) größer oder gleich 12 mm ist.

3. Kochvorrichtung (100) nach einem der Ansprüche 1 oder 2, wobei das Gasförderteil (21) umfasst: einen Antriebsabdeckungskörper (22), der eine Mehrzahl von Luftöffnungen (24) an einer Seitenfläche des Antriebsabdeckungskörpers (22) aufweist, wobei die Seitenfläche des Antriebsabdeckungskörpers (22) dem Garraum (101) der Kochvorrichtung (100) zugewandt ist; und
ein Lüfterflügelteil (23), das drehbar in dem Antriebsabdeckungskörper (22) angeordnet ist.

4. Kochvorrichtung (100) nach Anspruch 3, wobei der Antriebsabdeckungskörper (22) umfasst:
eine obere Wand (221) des Antriebsabdeckungskörpers; und eine Seitenwand (222) des Antriebsabdeckungskörpers, die mit der oberen Wand (221) des Antriebsabdeckungskörpers verbunden ist,
wobei das Lüfterflügelteil (23) unterhalb der oberen Wand (221) des Antriebsabdeckungskörpers angeordnet und von der Seitenwand (222) des Antriebsabdeckungskörpers umgeben ist.

5. Kochvorrichtung (100) nach Anspruch 4, wobei:
die Seitenwand (222) des Antriebsabdeckungskörpers als eine divergierende Seitenwand ausgebildet ist;
ein Ende mit kleinem Durchmesser der Seitenwand (222) des Antriebsabdeckungskörpers mit der oberen Wand (221) des Antriebsabdeckungskörpers verbunden ist; und
ein Ende mit großem Durchmesser der Seitenwand (222) des Antriebsabdeckungskörpers von der oberen Wand (221) des Antriebsabdeckungskörpers entfernt angeordnet ist.

6. Kochvorrichtung (100) nach Anspruch 5, wobei die Heizvorrichtung (30) in dem Garraum (101) und benachbart zu dem Antriebsabdeckungskörper (22) angeordnet ist, wobei die Seitenwand (222) des Antriebsabdeckungskörpers eine virtuelle Verlängerungsfläche (224) aufweist, die sich zu dem Garraum (101) hin erstreckt, wobei ein Bereich, der durch Auslenken um einen vorbestimmten kleinen Winkel β zu beiden Seiten der virtuellen Verlängerungsfläche (224) unter Verwendung des Endes mit großem Durchmesser der Seitenwand (222) des Antriebsabdeckungskörpers als Drehpunkt gebildet wird, ein vorbestimmter Bereich ist, und wobei ein Umfangsrand der Heizvorrichtung (30) den vorbestimmten Bereich nicht überschreitet;
wobei bevorzugt der kleine Winkel β die folgende Beziehung erfüllt: 0° < β ≤ 10°.

7. Kochvorrichtung (100) nach Anspruch 5 oder 6, wobei ein zwischen der Seitenwand (222) des Antriebsabdeckungskörpers und einer Querschnittsfläche des Garraums (101) gebildeter eingeschlossener Winkel γ im Bereich von 15° bis 75° liegt.

8. Kochvorrichtung (100) nach einem der Ansprüche 4 bis 7, wobei die obere Wand (221) des Antriebsabdeckungskörpers eine obere Wand (226) eines Mittelteils und eine äußere ringförmige obere Wand (225) umfasst, die in Umfangsrichtung mit der oberen Wand (226) des Mittelteils verbunden ist, wobei ein axialer Abstand zwischen der äußeren ringförmigen oberen Wand (225) und dem Lüfterflügelteil (23) größer ist als ein axialer Abstand zwischen der oberen Wand (226) des Mittelteils und dem Lüfterflügelteil (23); wobei bevorzugt eine Grenzfläche der äußeren ringförmigen oberen Wand (225) und der oberen Wand (226) des Mittelteils einem Umfang des Lüfterflügelteils (23) entspricht.

9. Kochvorrichtung (100) nach einem der Ansprüche 5 bis 8, wobei ein Luftabweiser durch einstückiges Ausbilden der oberen Wand (221) des Antriebsabdeckungskörpers und der Seitenwand (222) des Antriebsabdeckungskörpers gebildet ist.

10. Kochvorrichtung (100) nach einem der Ansprüche 4 bis 9, wobei der Antriebsabdeckungskörper (22) eine Bodenwand (223) des Antriebsabdeckungskörpers umfasst, die mit einem Ende der Seitenwand (222) des Antriebsabdeckungskörpers verbunden ist, das von der oberen Wand (221) des Antriebsabdeckungskörpers abgewandt ist, wobei die Mehrzahl von Luftöffnungen (24) an der Bodenwand (223) des Antriebsabdeckungskörpers ausgebildet ist.

11. Kochvorrichtung (100) nach Anspruch 10, wobei die Bodenwand (223) des Antriebsabdeckungskörpers in einer von der oberen Wand (221) des Antriebsabdeckungskörpers wegweisenden Richtung vorsteht, um an einer der oberen Wand (221) des Antriebsabdeckungskörpers zugewandten Seite der Bodenwand (223) des Antriebsabdeckungskörpers einen inneren konkaven Hohlraumkörper (227) zu bilden, wobei der innere konkave Hohlraumkörper (227) als ein Teil des Gasförderteil-Hohlraums (211) in dem Gasförderteil (21) ausgebildet ist.

12. Kochvorrichtung (100) nach Anspruch 11, wobei eine maximale Tiefe des inneren konkaven Hohlraumkörpers (227) nicht kleiner als 10 mm ist und/oder wobei zumindest ein Teil des Lüfterflügelteils (23) sich in den inneren konkaven Hohlraumkörper (227) hinein erstreckt.

13. Kochvorrichtung (100) nach einem der Ansprüche 1 bis 12, wobei die Gaszirkulationsvorrichtung (20) ferner einen Antriebsmotor (27) umfasst, der mit dem Gasförderteil (21) verbunden ist, wobei der Antriebsmotor (27) an einer Oberseite des Gasförderteils (21) montiert ist; wobei die Kochvorrichtung (100) bevorzugt ferner eine Wärmedämmplatte (61) umfasst, die zwischen
dem Antriebsmotor (27) und dem Gasförderteil (21) angeordnet ist, wobei:
die Wärmedämmplatte (61) über eine Wärmedämmplattenhalterung (62) mit dem Gasförderteil (21) verbunden ist; und
der Antriebsmotor (27) über eine Motorhalterung (28) mit der Wärmedämmplatte (61) verbunden ist.

## Revendications

1. Dispositif de cuisson (100), comprenant :
un boîtier (10) comportant une cavité de cuisson (101) ;
un appareil de circulation de gaz (20) disposé dans le boîtier (10) et à la partie supérieure de la cavité de cuisson (101), et entraînant un gaz dans la cavité de cuisson (101) de manière à le faire s'écouler et circuler, l'appareil de circulation de gaz (20) comprenant une partie d'entraînement du gaz (21), un appareil de chauffage (30) ; dans lequel l'appareil de circulation de gaz (20) et l'appareil de chauffage (30), à la partie supérieure de la cavité de cuisson (101), fournissent en continu de l'air chaud afin de produire un chauffage tridimensionnel complet sur le dessous, le dessus et le côté d'un aliment, ce qui permet d'obtenir un excellent effet de cuisson,
dans lequel la partie d'entraînement du gaz (21) comporte une cavité de la partie d'entraînement du gaz (211) prévue en son sein, la partie d'entraînement du gaz (21) comprenant une partie de pales de ventilateur (23) disposée au moins partiellement dans la cavité de la partie d'entraînement du gaz (211),
dans lequel la partie de pales de ventilateur (23) comprend une partie de pales horizontales de ventilateur (231) et une partie de pales verticales de ventilateur (232),
dans lequel une extrémité supérieure de la partie de pales verticales de ventilateur (232) est reliée à la partie de pales horizontales de ventilateur (231), de sorte que la partie de pales de ventilateur (23) présente globalement une forme en « L » ;
de telle sorte que, lorsque le gaz est entraîné par la partie d'entraînement du gaz (21),
le gaz comporte une première partie s'écoulant dans une première direction et une deuxième partie s'écoulant dans une deuxième direction, l'une de la première direction et de la deuxième direction étant une direction circonférentielle de la partie d'entraînement du gaz (21), et l'autre de la première direction et de la deuxième direction étant une direction radiale de la partie d'entraînement du gaz (21),
dans lequel la partie de pales de ventilateur (23) comprend en outre un disque de pales de ventilateur, et les extrémités intérieures de la pluralité de pales horizontales de ventilateur (231) sont reliées à la périphérie du disque de pales de ventilateur,
de sorte que le gaz peut s'écouler depuis la partie médiane vers la partie de pales de ventilateur (23), puis s'écouler à travers les pales horizontales de ventilateur (231) et les pales verticales de ventilateur (232),
dans lequel le dispositif de cuisson (100) comporte un jeu annulaire (212) entre la partie de pales de ventilateur (23) et une périphérie de la cavité de la partie d'entraînement du gaz (211), présentant une largeur radiale qui n'est pas constante dans la direction circonférentielle de la cavité de la partie d'entraînement du gaz (211),
**caractérisé en ce que**
la partie de pales de ventilateur (23) est disposée de manière excentrique par rapport à la cavité de la partie d'entraînement du gaz (211),
dans lequel
un rayon équivalent de la partie de pales de ventilateur (23) vaut r ;
un rayon d'une périphérie de la cavité de la partie d'entraînement du gaz (211) vaut R ;
une distance d'excentricité entre l'axe de rotation de la partie de pales de ventilateur (23) et l'axe central de la cavité de la partie d'entraînement du gaz (211) vaut e ; et la largeur du jeu annulaire (212) vaut C,
où 20 mm ≤ R-r ≤ 30 mm, 0 < e ≤ 0,4(R-r), et 0,6(R-r) ≤ C ≤ 1,4(R-r).

2. Dispositif de cuisson (100) selon la revendication 1, dans lequel le jeu annulaire (212) comporte un jeu minimal (213) et un jeu maximal (214) qui sont respectivement situés sur deux côtés de la partie de pales de ventilateur (23), le jeu annulaire (212) étant divisé en deux sections variant uniformément du jeu minimal (213) au jeu maximal (214) ;
dans lequel, de préférence :
le jeu maximal (214) est inférieur ou égal à 42 mm ; et
le jeu minimal (213) est supérieur ou égal à 12 mm.

3. Dispositif de cuisson (100) selon l'une quelconque des revendications 1 ou 2, dans lequel la partie d'entraînement du gaz (21) comprend :
un corps de couvercle d'entraînement (22) comportant une pluralité d'orifices d'air (24) sur une surface latérale du corps de couvercle d'entraînement (22), la surface latérale du corps de couvercle d'entraînement (22) étant orientée vers la cavité de cuisson (101) du dispositif de cuisson (100) ; et
une partie de pales de ventilateur (23) agencée de manière rotative dans le corps de couvercle d'entraînement (22).

4. Dispositif de cuisson (100) selon la revendication 3, dans lequel le corps de couvercle d'entraînement (22) comprend :
une paroi supérieure (221) du corps de couvercle d'entraînement ; et une paroi latérale (222) du corps de couvercle d'entraînement reliée à la paroi supérieure (221) du corps de couvercle d'entraînement,
la partie de pales de ventilateur (23) étant située sous la paroi supérieure (221) du corps de couvercle d'entraînement et entourée par la paroi latérale (222) du corps de couvercle d'entraînement.

5. Dispositif de cuisson (100) selon la revendication 4, dans lequel :
la paroi latérale (222) du corps de couvercle d'entraînement est formée comme une paroi latérale divergente ;
une extrémité de petit diamètre de la paroi latérale (222) du corps de couvercle d'entraînement est reliée à la paroi supérieure (221) du corps de couvercle d'entraînement ; et
une extrémité de grand diamètre de la paroi latérale (222) du corps de couvercle d'entraînement est éloignée de la paroi supérieure (221) du corps de couvercle d'entraînement.

6. Dispositif de cuisson (100) selon la revendication 5, dans lequel l'appareil de chauffage (30) est agencé dans la cavité de cuisson (101) et adjacent au corps de couvercle d'entraînement (22), dans lequel la paroi latérale (222) du corps de couvercle d'entraînement comporte une surface d'extension virtuelle (224) s'étendant vers la cavité de cuisson (101), dans lequel une plage formée par déviation d'un petit angle prédéterminé β de part et d'autre de la surface d'extension virtuelle (224), avec l'extrémité de grand diamètre de la paroi latérale (222) du corps de couvercle d'entraînement comme point d'appui, est une plage prédéterminée, et dans lequel un bord périphérique de l'appareil de chauffage (30) ne dépasse pas la plage prédéterminée ;
dans lequel, de préférence, le petit angle β satisfait à la relation suivante : 0° < β ≤ 10°.

7. Dispositif de cuisson (100) selon la revendication 5 ou 6, dans lequel un angle inclus γ formé entre la paroi latérale (222) du corps de couvercle d'entraînement et une surface de section transversale de la cavité de cuisson (101) est compris entre 15° et 75°.

8. Dispositif de cuisson (100) selon l'une quelconque des revendications 4 à 7, dans lequel la paroi supérieure (221) du corps de couvercle d'entraînement comprend une paroi supérieure (226) d'une partie médiane et une paroi supérieure annulaire extérieure (225) reliée circonférentiellement à la paroi supérieure (226) de la partie médiane, une distance axiale entre la paroi supérieure annulaire extérieure (225) et la partie de pales de ventilateur (23) étant supérieure à une distance axiale entre la paroi supérieure (226) de la partie médiane et la partie de pales de ventilateur (23) ; dans lequel, de préférence, une interface de la paroi supérieure annulaire extérieure (225) et de la paroi supérieure (226) de la partie médiane correspond à une périphérie de la partie de pales de ventilateur (23).

9. Dispositif de cuisson (100) selon l'une quelconque des revendications 5 à 8, dans lequel un déflecteur d'air est formé par la formation d'un seul tenant de la paroi supérieure (221) du corps de couvercle d'entraînement et de la paroi latérale (222) du corps de couvercle d'entraînement.

10. Dispositif de cuisson (100) selon l'une quelconque des revendications 4 à 9, dans lequel le corps de couvercle d'entraînement (22) comprend une paroi inférieure (223) du corps de couvercle d'entraînement reliée à une extrémité de la paroi latérale (222) du corps de couvercle d'entraînement qui est orientée à l'opposé de la paroi supérieure (221) du corps de couvercle d'entraînement, la pluralité d'orifices d'air (24) étant formée dans la paroi inférieure (223) du corps de couvercle d'entraînement.

11. Dispositif de cuisson (100) selon la revendication 10, dans lequel la paroi inférieure (223) du corps de couvercle d'entraînement fait saillie, dans une direction orientée à l'opposé de la paroi supérieure (221) du corps de couvercle d'entraînement, afin de former un corps de cavité concave intérieur (227) sur un côté de la paroi inférieure (223) du corps de couvercle d'entraînement orienté vers la paroi supérieure (221) du corps de couvercle d'entraînement, le corps de cavité concave intérieur (227) étant configuré en tant que partie de la cavité de la partie d'entraînement du gaz (211) dans la partie d'entraînement du gaz (21).

12. Dispositif de cuisson (100) selon la revendication 11, dans lequel une profondeur maximale du corps de cavité concave intérieur (227) n'est pas inférieure à 10 mm, et/ou dans lequel au moins une partie de la partie de pales de ventilateur (23) s'étend dans le corps de cavité concave intérieur (227).

13. Dispositif de cuisson (100) selon l'une quelconque des revendications 1 à 12, dans lequel l'appareil de circulation de gaz (20) comprend en outre un moteur d'entraînement (27) relié à la partie d'entraînement du gaz (21), le moteur d'entraînement (27) étant monté sur une partie supérieure de la partie d'entraînement du gaz (21) ; dans lequel, de préférence, le dispositif de cuisson (100) comprend en outre une plaque d'isolation thermique (61) disposée entre le moteur d'entraînement (27) et la partie d'entraînement du gaz (21), dans lequel :
la plaque d'isolation thermique (61) est reliée à la partie d'entraînement du gaz (21) par l'intermédiaire d'un support de plaque d'isolation thermique (62) ; et le moteur d'entraînement (27) est relié à la plaque d'isolation thermique (61) par l'intermédiaire d'un support de moteur (28).
